# EUROPEAN PATENT SPECIFICATION

(11) **EP 3 689 576 B1**
(45) Date of publication and mention of the grant of the patent: **23.08.2023**
(21) Application number: 20153540.8
(22) Date of filing: 24.01.2020
(51) Int. Cl.: B29C 45/84, B29C 45/17, G05B 19/409, B29C 45/76

(54) **INJECTION MOLDING MACHINE AND OPERATION SUPPORT METHOD**
SPRITZGIESSMASCHINE UND VERFAHREN ZUR UNTERSTÜTZUNG DES BETRIEBS
MACHINE DE MOULAGE PAR INJECTION ET PROCÉDÉ DE SUPPORT D'OPÉRATION

(30) Priority: 31.01.2019 JP 2019016419
(43) Date of publication of application: 05.08.2020
(73) Proprietor: SUMITOMO HEAVY INDUSTRIES, LTD., Tokyo 141-6025 (JP)
(72) Inventor: TSUNEMI, Koki, Chiba-shi, Chiba, 263-0001, (JP); EBATA, Koichiro, Chiba-shi, Chiba, 263-0001, (JP); MARUO, Daisuke, Chiba-shi, Chiba, 263-0001, (JP); SUZUKI, Keisuke, Chiba-shi, Chiba, 263-0001, (JP)
(74) Representative: Louis Pöhlau Lohrentz

(56) References cited:
- EP-A1- 3 006 183
- WO-A2-02/45936
- US-A- 5 520 528
- US-A1- 2010 138 031
- US-A1- 2015 331 399
- US-A1- 2017 334 113

## Description

### BACKGROUND OF THE INVENTION

### Field of the Invention

Certain embodiments of the present invention relate to an injection molding machine and an operation support method.

### Description of Related Art

An injection molding machine in the related art disclosed in Japanese Unexamined Patent Publication No. 06-126800 is provided with a display unit, and this type of display unit includes a plurality of operation buttons. The operation buttons are mechanical buttons such as a mold opening button for a mold clamping unit to execute a mold opening operation of a mold unit, and a mold closing button for the mold clamping unit to execute a mold closing operation of the mold unit. United States Patent No. 5, 520, 528 discloses a molding machine having a hand operated control which is used for manually operating to move a plurality of movable members provided in the molding machine . United States Patent Publication No. 2017/334113 discloses an injection molding machine management system displaying the position of each injection molding machine and the position of each operator within a molding factory. European Patent Publication No. 3 006 183 discloses a control device for an injection molding machine, and display of a screen included in a control device . International Patent Publication No. 2002/45936 discloses an injection molding machine with a machine control and a display device for the visual reproduction of information. United States Patent Publication No. 2015/331399 discloses the methods and devices which allow the secure, intentional, and as far as possible error-free initiation of different and directly executable industrial functions. United States Patent Publication No. 2010/138031 discloses a method for controlling one or several machines, or a production cell, having repeatable process sequences with a machine controller and a control unit, configured as a man-machine-interface (MMI).

[Patent Document 1] Japanese Unexamined Patent Publication No. 06-126800
[Patent Document 2] United States Patent No. 5,520,528
[Patent Document 3] United States Patent Publication No. 2017/334113
[Patent Document 4] European Patent Publication No. 3 006 183
[Patent Document 5] International Patent Publication No. 2002/45936
[Patent Document 6] United States Patent Publication No. 2015/331399
[Patent Document 7] United States Patent Publication No. 2010/138031

### SUMMARY OF THE INVENTION

However, since the operation buttons are installed at a place separated from the mold unit in the injection molding machine in the related art, an operator needs to grope for the operation button and to press a desired operation button while turning a line of sight toward the mold unit to check an operating state of the mold unit when work such as initial molding condition setting and positioning of the injection molding machine is performed. Therefore, a button other than the desired operation button may be pressed and thus the mold unit may be damaged.

In view of the above problems, the present invention prevents a mistake in pressing an operation button.

An injection molding machine according to an aspect of an embodiment has an operation unit and a controller. The operation unit has a plurality of operation buttons, and the controller has a specific information providing section which provides an operator with specific information that is displayed onto a projected portion for specifying the operation button to be pressed by the operator so that the operator recognizes whether the operation button to be pressed is a desired operation button or a button other than the desired operation button even without visually checking the operation button on the operation unit.

According to an aspect of the embodiment, it is possible to prevent the mistake in pressing the operation button.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a view showing a state in which a slide-type safety cover is attached around a mold unit.
Fig. 4 is a view showing an example of operation buttons provided in a second operation section shown in Fig. 3.
Fig. 5 is a view showing a state when an operator of the injection molding machine presses the operation button provided in the second operation section.
Fig. 6 is a functional block diagram showing components of a controller included in the injection molding machine according to the embodiment.
Fig. 7 is a flowchart of image display processing by the controller shown in Fig. 6.
Figs. 8A and 8B are views for describing a first display example of operation button images.
Figs. 9A and 9B are views for describing a second display example of the operation button images.
Figs. 10A and 10B are views for describing a third display example of the operation button images.
Fig. 11 is a functional block diagram showing components according to a first modification example of the controller included in the injection molding machine according to the embodiment.
Fig. 12 is a flowchart of image display processing by the controller shown in Fig. 11.
Figs. 13A and 13B are views for describing a fourth display example of the operation button images.
Figs. 14A and 14B are views for describing a fifth display example of the operation button images.
Figs. 15A and 15B are views for describing a sixth display example of the operation button images.
Fig. 16 is a functional block diagram showing components according to a second modification example of the controller included in the injection molding machine according to the embodiment, which does not form part of the invention.
Fig. 17 is a flowchart of vibration processing by the controller shown in Fig. 16.
Figs. 18A and 18B are views showing an example of a design portion formed on the front surface of the operation buttons 1-1 and 1-2.
Fig. 19 is a functional block diagram showing components according to a third modification example of the controller included in the injection molding machine according to the embodiment, which does not form part of the invention.
Fig. 20 is a flowchart of sound processing by the controller shown in Fig. 19.
Fig. 21 is a functional block diagram showing components according to a fourth modification example of the controller included in the injection molding machine according to the embodiment, which does not form part of the invention.

### DETAILED DESCRIPTION OF THE INVENTION

Hereinafter, an embodiment of the invention will be described with reference to drawings. In each drawing, the same or corresponding reference numerals are assigned to the same or corresponding configurations, and descriptions thereof are omitted.

### (Injection Molding Machine)

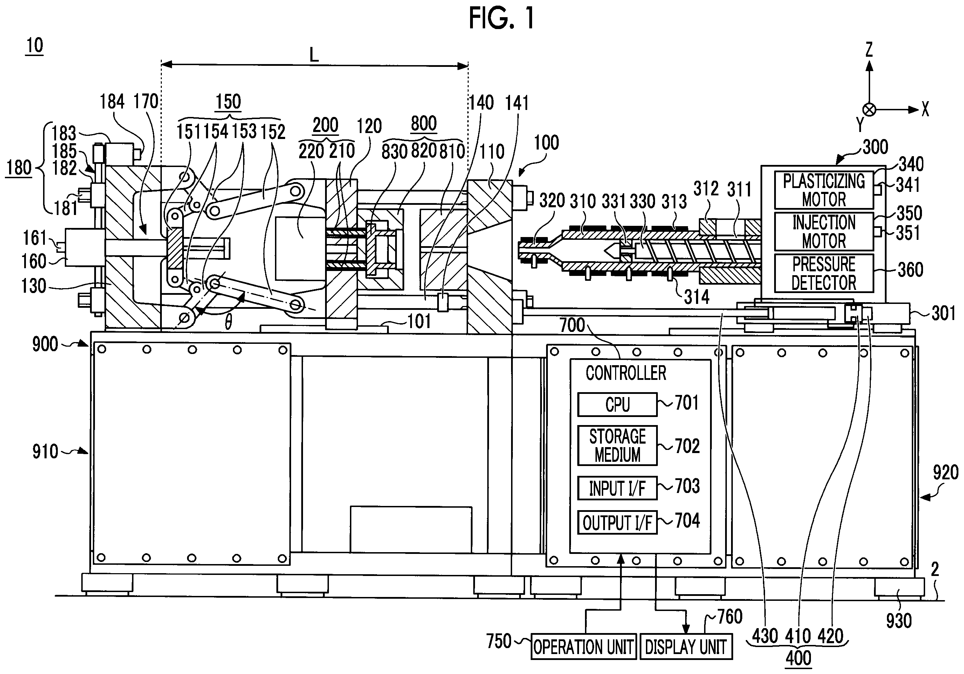

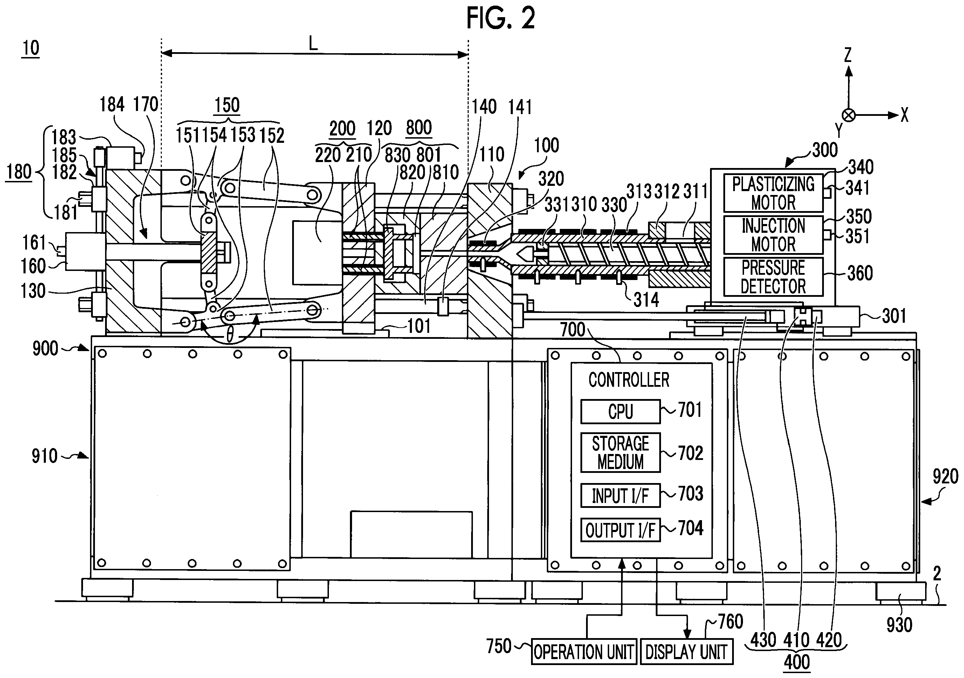

Fig. 1 is a view showing a state when a mold opening of an injection molding machine according to an embodiment is completed. Fig. 2 is a view showing a state when a mold of the injection molding machine according to the embodiment is clamped. In the specification, an X-axis direction, a Y-axis direction, and a Z-axis direction are directions perpendicular to each other. The X-axis direction and the Y-axis direction represent a horizontal direction, and the Z-axis direction represents a vertical direction. In a case where a mold clamping unit 100 is a horizontal type, the X-axis direction is a mold opening and closing direction and the Y-axis direction is a width direction of an injection molding machine 10. A negative side in the Y-axis direction is referred to as an operation side, and a positive side in the Y-axis direction is referred to as a non-operation side.

As shown in Figs. 1 and 2, the injection molding machine 10 includes a mold clamping unit 100, an ejector unit 200, an injection unit 300, a movement unit 400, a controller 700, and a frame 900. The frame 900 includes a mold clamping unit frame 910 and an injection unit frame 920. The mold clamping unit frame 910 and the injection unit frame 920 are respectively installed on a floor 2 through a leveling adjuster 930. The controller 700 is disposed in an internal space of the injection unit frame 920. Hereinafter, each component of the injection molding machine 10 will be described.

### (Mold Clamping Unit)

In descriptions of the mold clamping unit 100, a movement direction (for example, X-axis positive direction) of a movable platen 120 at the time of mold closing is defined as a front side, and a movement direction (for example, X-axis negative direction) of the movable platen 120 at the time of mold opening is defined as a rear side.

The mold clamping unit 100 performs mold closing, pressurizing, mold clamping, depressurizing, and mold opening of a mold unit 800. The mold unit 800 includes a stationary mold 810 and a movable mold 820.

The mold clamping unit 100 is, for example, the horizontal type, and the mold opening and closing direction is the horizontal direction. The mold clamping unit 100 includes a stationary platen 110, a movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the mold clamping unit frame 910. The stationary mold 810 is attached to a surface of the stationary platen 110 facing the movable platen 120.

The movable platen 120 is disposed so as to be movable in the mold opening and closing direction with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus the mold closing, pressurizing, mold clamping, depressurizing, and mold opening of the mold unit 800 are performed.

The toggle support 130 is disposed so as to be separated from the stationary platen 110 and is placed on the mold clamping unit frame 910 to be movable in mold opening and closing direction. In addition, the toggle support 130 may be disposed so as to be movable along a guide which is placed on the mold clamping unit frame 910. The guide of the toggle support 130 may be also used as the guide 101 of the movable platen 120.

In addition, the stationary platen 110 is fixed to the mold clamping unit frame 910, and the toggle support 130 is disposed so as to be movable in the mold opening and closing direction with respect to the mold clamping unit frame 910 in the present embodiment. However, the toggle support 130 may be fixed to the mold clamping unit frame 910, and stationary platen 110 may be disposed so as to be movable in the mold opening and closing direction with respect to the mold clamping unit frame 910.

The stationary platen 110 and the toggle support 130 are connected to each other with a gap L in the mold opening and closing direction by the tie bar 140. Aplurality of (forexample, four) tie bars 140 may be used. The plurality of tie bars 140 are disposed in parallel in the mold opening and closing direction and extend according to a mold clamping force. A tie bar strain detector 141 which detects strain of the tie bar 140 maybe provided in at least one tie bar 140. The tie bar strain detector 141 sends a signal indicating a detection result to the controller 700. The detection result of the tie bar strain detector 141 is used for detection or the like of the mold clamping force.

In addition, the tie bar strain detector 141 is used as a mold clamping force detector which detects the mold clamping force in the present embodiment. However, the present invention is not limited thereto. The mold clamping force detector is not limited to a strain gauge type detector and may be a piezoelectric type detector, a capacitance type detector, a hydraulic type detector, an electromagnetic type detector, or the like. An attachment position of the mold clamping force detector is also not limited to the tie bar 140.

The toggle mechanism 150 is disposed between the movable platen 120 and the toggle support 130 and causes the movable platen 120 to move in the mold opening and closing direction with respect to the toggle support 130. The toggle mechanism 150 is configured of a crosshead 151, a pair of link groups, and the like. The pair of link groups includes respectively a first link 152 and a second link 153 which are bendably and stretchably connected to each other by pins or the like. The first link 152 is oscillatingly attached to the movable platen 120 by pins or the like. The second link 153 is oscillatingly attached to the toggle support 130 by pins or the like. The second link 153 is attached to the crosshead 151 through a third link 154. When the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, the number of nodes in each link group is five in Figs. 1 and 2, but may be four. One end portion of the third link 154 may be coupled to a node between the first link 152 and the second link 153.

The mold clamping motor 160 is attached to the toggle support 130 and operates the toggle mechanism 150. The mold clamping motor 160 causes the crosshead 151 to move forward or rearward with respect to the toggle support 130, and thus the first links 152 and the second links 153 are bent and stretched and the movable platen 120 moves forward or rearward with respect to the toggle support 130. The mold clamping motor 160 is directly connected to the motion conversion mechanism 170, but may be connected to the motion conversion mechanism 170 through a belt, a pulley, or the like.

The motion conversion mechanism 170 converts a rotarymotion of the mold clamping motor 160 into a linear motion of the crosshead 151. The motion conversion mechanism 170 includes a screw shaft and a screw nut which is screwed onto the screw shaft. A ball or a roller may be interposed between the screw shaft and the screw nut.

The mold clamping unit 100 performs a mold closing process, a pressurizing process, a mold clamping process, a depressurizing process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 touches the stationary mold 810. A position or movement speed of the crosshead 151 is detected using, for example, a mold clamping motor encoder 161. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. Moreover, amovableplatenposition detector which detects the position of the movable platen 120 and a movable platen movement speed detector which detects the movement speed of the movable platen 120 are not limited to the mold clamping motor encoder 161, and a general detector can be used.

In the pressurizing process, the mold clamping motor 160 is further driven to further move the crosshead 151 forward from the mold closing completion position to a mold clamping position to generate the mold clamping force.

In the mold clamping process, the mold clamping motor 160 is driven to maintain the position of the crosshead 151 at the mold clamping position. In the mold clamping process, the mold clamping force generated in the pressurizing process is maintained. In the mold clamping process, a cavity space 801 (refer to Fig. 2) is formed between the movable mold 820 and the stationary mold 810, and the injection unit 300 fills the cavity space 801 with a liquid molding material. A filled molding material is solidified, and thus a molding product can be obtained.

The number of cavity spaces 801 may be one or more. In the latter case, a plurality of molding products can be obtained simultaneously. An insert material may be disposed in a part of the cavity space 801 and the other part of the cavity space 801 may be filled with the molding material. A molding product in which the insert material and the molding material are integrated is obtained.

In the depressurization process, the mold clamping motor 160 is driven to move the crosshead 151 rearward from the mold clamping position to the mold opening start position. Accordingly, the movable platen 120 moves rearward and the mold clamping force is reduced. The mold opening start position may be the same as the mold closing completion position.

In the mold opening process, the mold clamping motor 160 is driven to move the crosshead 151 rearward from the mold opening start position to the mold opening completion position at the set movement speed. Accordingly, the movable platen 120 moves rearward and the movable mold 820 is separated from the stationary mold 810. Thereafter, the ejector unit 200 ejects the molding product from the movable mold 820.

Setting conditions in the mold closing process, the pressurizing process, and the mold clamping process are collectively set as a series of setting conditions . For example, movement speeds or positions (including mold closing start position, movement speed switching position, mold closing completion position, and mold clamping position) of the crosshead 151 and the mold clamping force in the mold closing process and the pressurizing process are collectively set as a series of setting conditions. The mold closing start position, the movement speed switching position, the mold closing completion position, and the mold clamping position are arranged in this order from the rear side to the front side and represent a start point and an end point of a section where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, movement speeds or positions (mold opening start position, movement speed switching position, and mold opening completion position) of the crosshead 151 in the depressurization process and the mold opening process are collectively set as a series of setting conditions . The mold opening start position, the movement speed switching position, and the mold opening completion position are arranged in this order from the front side to the rear side and represent a start point and an end point of a section where the movement speed is set. The movement speed is set for each section. The movement speed switching position may be one or more. The movement speed switching position may not be set. The mold opening start position may be the same as the mold closing completion position. Moreover, the mold opening completion position may be the same as the mold closing start position.

In addition, the movement speed, the position, or the like of the movable platen 120 may be set instead of the movement speed, the position, or the like of the crosshead 151. Moreover, the mold clamping force may be set instead of the position (for example, the mold clamping position) of the crosshead or the position of the movable platen.

Meanwhile, the driving force of the mold clamping motor 160 is amplified by the toggle mechanism 150 and transmitted to the movable platen 120. An amplification magnification of the toggle mechanism 150 is also referred to as a toggle magnification. The toggle magnification is changed according to an angle θ (hereinafter also referred to as "link angle θ") between the first link 152 and the second link 153. The link angle θ is obtained from the position of the crosshead 151. When the link angle θ is 180°, the toggle magnification becomes the maximum.

In a case where a space of the mold unit 800 is changed by replacement of the mold unit 800, a temperature change of the moldunit 800, or the like, a mold space adjustment is performed such that a predetermined mold clamping force is obtained when the mold is clamped. In the mold space adjustment, the gap L between the stationary platen 110 and the toggle support 130 is adjusted, for example, such that the link angle θ of the toggle mechanism 150 at the time of a mold touch where the movable mold 820 touches the stationary mold 810 becomes a predetermined angle .

The mold clamping unit 100 has the mold space adjustment mechanism 180. The mold space adjustment mechanism 180 adjusts the gap L between the stationary platen 110 and the toggle support 130 to perform the mold space adjustment. In addition, the mold space adjustment is performed, for example, between the end of a molding cycle to the start of a next molding cycle. The mold space adjustment mechanism 180 includes, for example, a screw shaft 181 which is formed on a rear end portion of the tie bar 140, a screw nut 182 which is held by the toggle support 130 so as to be rotatable and non-movable forward or rearward, and a mold space adjustment motor 183 which rotates the screw nut 182 screwed onto the screw shaft 181.

The screw shaft 181 and the screw nut 182 are provided for each tie bar 140. A rotation driving force of the mold space adjustment motor 183 may be transmitted to a plurality of screw nuts 182 through a rotation driving force transmission portion 185. The plurality of screw nuts 182 can be synchronously rotated with each other. In addition, it is possible to individually rotate the plurality of screw nuts 182 by changing a transmission path of the rotation driving force transmission portion 185.

The rotation driving force transmission portion 185 is configured of, for example, a gear. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation driving force transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184 . The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 according to the present embodiment is the horizontal type in which the mold opening and closing direction is the horizontal direction, but may be a vertical type in which the mold opening and closing direction is the vertical direction.

In addition, the mold clamping unit 100 according to the present embodiment includes the mold clamping motor 160 as a drive source, but may include a hydraulic cylinder instead of the mold clamping motor 160. Moreover, the mold clamping unit 100 may have a linear motor for mold opening and closing and may have an electromagnet for mold clamping.

### (Ejector Unit)

Similarly to the descriptions of the mold clamping unit 100, in descriptions of the ejector unit 200, the movement direction (for example, the X-axis positive direction) of the movable platen 120 at the time of the mold closing is defined as the front side, and the movement direction (for example, the X-axis negative direction) of the movable platen 120 at the time of the mold opening is defined as the rear side.

The ejector unit 200 is attached to the movable platen 120 and moves forward or rearward together with the movable platen 120. The ejector unit 200 includes an ejector rod 210 which ejects the molding product from the mold unit 800 and a drive mechanism 220 which moves the ejector rod 210 in the X-axis direction.

The ejector rod 210 is disposed in a through-hole of the movable platen 120 so as to be movable forward or rearward. A front end portion of the ejector rod 210 is in contact with a movable member 830 which is disposed inside the movable mold 820 so as to be movable forward or rearward. The front end portion of the ejector rod 210 may be connected to the movable member 830 or may not be connected to the movable member 830.

The drive mechanism 220 includes, for example, an ejector motor and a motion conversion mechanism which converts a rotary motion of the ejector motor into a linear motion of the ejector rod 210. The motion conversion mechanism includes a screw shaft and a screw nut which is screwed onto the screw shaft. A ball or a roller may be interposed between the screw shaft and the screw nut.

The ejector unit 200 performs an ejection process under the control of the controller 700. In the ejection process, the ejector rod 210 moves forward from a stand by position to an ejection position at a set movement speed, and thus the movable member 830 moves forward and the molding product is ejected. Thereafter, the ejector motor is driven to move the ejector rod 210 rearward at a set movement speed, and thus the movable member 830 moves rearward to an original standby position.

The position or the movement speed of the ejector rod 210 is detected using, for example, an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, the X-axis negative direction) of a screw 330 during filling is defined as the front side, and a movement direction (for example, the X-axis positive direction) of the screw 330 during plasticizing is defined as the rear side.

The injection unit 300 is installed on a slide base 301, and the slide base 301 is disposed so as to be movable forward or rearward with respect to the injection unit frame 920. The injection unit 300 is disposed so as to be movable forward or rearward with respect to the mold unit 800. The injection unit 300 touches the mold unit 800 and fills the cavity space 801 inside the mold unit 800 with the molding material. The injection unit 300 includes, for example, a cylinder 310, a nozzle 320, the screw 330, a plasticizing motor 340, an injection motor 350, and a pressure detector 360.

The cylinder 310 heats the molding material which is supplied from a supply port 311 to the inner portion of the cylinder 310. The molding material includes, for example, a resin. The molding material is formed, for example, in a pallet shape and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (for example, the X-axis direction) of the cylinder 310. The heating unit 313 and the temperature detector 314 are provided in each of the plurality of zones . The controller 700 controls the heating unit 313 such that a set temperature is set in each of the plurality of zones and a detection temperature of the temperature detector 314 becomes the set temperature.

The nozzle 320 is provided on the front end portion of the cylinder 310 and is pressed against the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. When the screw 330 rotates, the molding material is fed forward along spiral grooves of the screw 330. The molding material is gradually melted by heat from the cylinder 310 while being fed forward. As the liquid molding material is fed to the front side of the screw 330 and is accumulated in a front portion of the cylinder 310, the screw 330moves rearward. Thereafter, when the screw 330 moves forward, the liquid molding material accumulated in the front side of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents a backflow of the molding material from the front side of the screw 330 toward the rear side when the screw 330 is pressed forward.

When the screw 330 moves forward, the backflow prevention ring 331 is pressed toward the rear side by the pressure of the molding material in the front side of the screw 330 and moves rearward relatively with respect to the screw 330 to a close position (refer to Fig. 2) at which a flow path of the molding material is closed. Accordingly, the molding material accumulated in the front side of the screw 330 is prevented from flowing toward the rear side.

On the other hand, when the screw 330 rotates, the backflow prevention ring 331 is pressed toward the front side by the pressure of the molding material to be fed forward along the spiral grooves of the screw 330 and moves forward relatively with respect to the screw 330 to an open position (refer to Fig. 1) at which the flow path of the molding material is open. Accordingly, the molding material is fed to the front side of the screw 330.

The backflow prevention ring 331 may be any one of a co-rotation type ring which rotates together with the screw 330 or a non-co-rotation type ring which does not rotate together with the screw 330.
In addition, the injection unit 300 may include a drive source which causes the backflow prevention ring 331 to move forward or rearward with respect to the screw 330 between the open position and the close position.

The plasticizing motor 340 rotates the screw 330. A drive source which rotates the screw 330 is not limited to the plasticizing motor 340 and may be, for example, a hydraulic pump.

The injection motor 350 causes the screw 330 to move forward or rearward. A motion conversion mechanism or the like which converts a rotary motion of the injection motor 350 into a linear motion of the screw 330 is provided between the injection motor 350 and the screw 330. The motion conversion mechanism includes, for example, a screw shaft and a screw nut which is screwed onto the screw shaft. A ball, a roller, or the like may be provided between the screw shaft and the screw nut. A drive source which causes the screw 330 to move forward or rearward is not limited to the injection motor 350 and may be, for example, a hydraulic cylinder.

The pressure detector 360 detects a force to be transmitted between the injection motor 350 and the screw 330. The detected force is converted into pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed, and thus the molding material is fed forward along the spiral grooves of the screw 330. According to this, the molding material is gradually melted. As the liquid molding material is fed to the front side of the screw 330 and is accumulated in a front portion of the cylinder 310, the screw 330 moves rearward. The rotating speed of the screw 330 is detected using, for example, a plasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven to add a set back pressure with respect to the screw 330. The back pressure with respect to the screw 330 is detected using, for example, the pressure detector 360. The pressure detector 360 sends a signal indicating a detection result to the controller 700. When the screw 330 moves rearward to a plasticizing completion position and a predetermined amount of the molding material is accumulated in the front side of the screw 330, the plasticizing process is completed.

The position and rotating speed of the screw 330 in the plasticizing process are collectively set as a series of setting conditions. For example, a plasticizing start position, a rotating speed switching position, and a plasticizing completion position are set. These positions are arranged in this order from the front side to the rear side and represent a start point and an end point of a section where the rotating speed is set. The rotating speed is set for each section. The rotating speed switching position may be one or more. The rotating speed switching position may not be set. Moreover, the back pressure is set for each section.

In the filling process, the injection motor 350 is driven to move the screw 330 forward at a set movement speed, and thus the cavity space 801 inside the mold unit 800 is filled with the liquid molding material accumulated in the front side of the screw 330. A position or movement speed of the screw 330 is detected using, for example, an injection motor encoder 351. The injection motor encoder 351 detects the rotation of the injection motor 350 and sends a signal indicating a detection result to the controller 700. When the position of the screw 330 reaches a set position, switching (so-called V/P switching) from the filling process to the holding pressure process is performed. A position at which the V/P switching is performed is also referred to as a V/P switching position. The set movement speed of the screw 330 may be changed according to the position of the screw 330, the time, or the like.

The position and movement speed of the screw 330 in the filling process are collectively set as a series of setting conditions. For example, a filling start position (also referred to as "injection start position"), a movement speed switching position, and a V/P switching position are set. These positions are arranged in this order from the rear side to the front side and represent a start point and an end point of a section where the movement speed is set. The movement speed is set for each section. The movement speed switching position may be one or more. The movement speed switching position may not be set.

The upper limit value of the pressure of the screw 330 is set for each section in which the movement speed of the screw 330 is set. The pressure of the screw 330 is detected by the pressure detector 360. In a case where a detection value of the pressure detector 360 is equal to or less than a set pressure, the screw 330 moves forward at a set movement speed. On the other hand, in a case where the detection value of the pressure detector 360 exceeds the set pressure, the screw 330 moves forward at a movement speed slower than the set movement speed such that the detection value of the pressure detector 360 is equal to or less than the set pressure for the purpose of mold protection.

In addition, in the filling process, the screw 330 may temporarily stop at the V/P switching position after the position of the screw 330 reaches the V/P switching position, and then the V/P switching may be performed. Immediately before the V/P switching, the screw 330 may move forward or rearward at a very slow speed instead of the stopping of the screw 330. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to press the screw 330 forward, and thus a pressure (hereinafter also referred to as a "holding pressure") of the molding material on a front end portion of the screw 330 is held at a set pressure and the molding material remaining inside the cylinder 310 is pressed toward the mold unit 800. Insufficient molding materials due to cooling shrinkage in the mold unit 800 can be replenished. The holding pressure is detected using, for example, the pressure detector 360. The pressure detector 360 sends a signal indicating a detection result to the controller 700. A set value of the holding pressure may be changed according to an elapsed time from the start of the holding pressure process or the like. A plurality of holding pressures and holding times for holding the holding pressure in the holding pressure process may be set, or the holding pressures and the holding time may be set collectively as a series of setting conditions.

In the holding pressure process, the molding material of the cavity space 801 in the mold unit 800 is gradually cooled, and an inlet of the cavity space 801 is closed by the solidified molding material when the holding pressure process is completed. This state is referred to as a gate seal, and the backflow of the molding material from the cavity space 801 is prevented. After the holding pressure process, a cooling process starts. In the cooling process, solidification of the molding material in the cavity space 801 is performed. The plasticizing process may be performed during the cooling process in order to shorten a molding cycle time.

In addition, the injection unit 300 according to the present embodiment is an inline screw type, but may be a preplasticizing type or the like. A preplasticizing type injection unit supplies the molding material melted inside a plasticizing cylinder to an injection cylinder and injects the molding material from the injection cylinder into the mold unit. In the plasticizing cylinder, a screw is disposed so as to be rotatable and non-movable forward or rearward, or a screw is disposed so as to be rotatable and movable forward or rearward. On the other hand, a plunger is disposed in the injection cylinder so as to be movable forward or rearward.

In addition, the injection unit 300 according to the present embodiment is the horizontal type in which the axial direction of the cylinder 310 is the horizontal direction, but may be the vertical type in which the axial direction of the cylinder 310 is the vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (for example, the X-axis negative direction) of the screw 330 during filling is defined as the front side, and the movement direction (for example, the X-axis positive direction) of the screw 330 during plasticizing is defined as the rear side.

The movement unit 400 causes the injection unit 300 to move forward or rearward with respect to the mold unit 800 . Moreover, the movement unit 400 presses the nozzle 320 with respect to the mold unit 800 to generate a nozzle touch pressure. The movement unit 400 includes a hydraulic pump 410, a motor 420 as a drive source, a hydraulic cylinder 430 as a hydraulic actuator, or the like. When the motor 420 is driven, the hydraulic pump 410 supplies a hydraulic pressure to the hydraulic cylinder 430, and the hydraulic cylinder 430 causes the injection unit 300 to move forward or rearward with the hydraulic pressure.

In addition, the movement unit 400 includes the hydraulic cylinder 430 in the present embodiment, but the present invention is not limited thereto. For example, an electric motor and a motion conversion mechanism which converts a rotary motion of the electric motor into a linear motion of the injection unit 300 may be used instead of the hydraulic cylinder 430.

### (Controller)

The controller 700 is configured of, for example, a computer and includes a central processing unit (CPU) 701, a storage medium 702 such as a memory, an input interface 703, and an output interface 704 as shown in Figs. 1 and 2. The controller 700 causes the CPU 701 to execute a program stored in the storage medium 702 to perform various controls. Moreover, the controller 700 receives a signal from the outside through the input interface 703 and transmits a signal to the outside through the output interface 704.

The controller 700 repeats the plasticizing process, the mold closing process, the pressurizing process, the mold clamping process, the filling process, the holding pressure process, the cooling process, the depressurizing process, the mold opening process, the ejection process, and the like to repeatedly manufacture the molding product. A series of operations to obtain the molding product, for example, an operation from the start of the plasticizing process to the start of the next plasticizing process is also referred to as a "shot" or a "molding cycle". Moreover, a time required for one shot is also referred to as a "molding cycle time" or "cycle time".

For example, one molding cycle includes the plasticizing process, the mold closing process, the pressurizing process, the mold clamping process, the filling process, the holding pressure process, the cooling process, the depressurizing process, the mold opening process, and the ejection process in this order. This order herein is an order of the start of each process. The filling process, the holding pressure process, and the cooling process are performed during the mold clamping process. The start of the mold clamping process may coincide with the start of the filling process . The end of the depressurizing process coincides with the start of the mold opening process.

In addition, a plurality of processes may be simultaneously performed in order to shorten the molding cycle time. For example, the plasticizing process may be performed during the cooling process of the previous molding cycle or may be performed during the mold clamping process . In this case, the mold closing process may be performed at the beginning of the molding cycle . Moreover, the filling process may be started during the mold closing process . Moreover, the ejection process may be started during the mold opening process. In a case where an on and off valve which opens and closes the flow path of the nozzle 320 is provided, the mold opening process may be started during the plasticizing process. This is because the molding material does not leak from the nozzle 320 as long as the on and off valve closes the flow path of the nozzle 320 even when the mold opening process starts during the plasticizing process.

In addition, the one molding cycle may include a process other than the plasticizing process, the mold closing process, the pressurizing process, the mold clamping process, the filling process, the holding pressure process, the cooling process, the depressurizing process, the mold opening process, and the ejection process.

For example, a pre-plasticizing suck-back process in which the screw 330 moves rearward to a plasticizing start position set in advance may be performed after the completion of the holding pressure process and before the start of the plasticizing process. It is possible to reduce the pressure of the molding material accumulated in the front side of the screw 330 before the start of the plasticizing process and thus to prevent the abrupt rearward movement of the screw 330 at the start of the plasticizing process .

Moreover, a post-plasticizing suck-back process in which the screw 330 moves rearward to a filling start position (also referred to as "injection start position") set in advance may be performed after the completion of the plasticizing process and before the start of the filling process. It is possible to reduce the pressure of the molding material accumulated in the front side of the screw 330 before the start of the filling process and thus to prevent the leakage of the molding material from the nozzle 320 before the start of the filling process.

The controller 700 is connected to an operation unit 750 or the display unit 760. The operation unit 750 receives an input operation by a user and outputs a signal in response to an input operation to the controller 700. The display unit 760 displays a display screen in response to the input operation in the operation unit 750 under the control of the controller 700.

The display screen is used for the setting of the injection molding machine 10 or the like. A plurality of display screens are provided and displayed by switching or overlapping each other . A user operates the operation unit 750 while viewing the display screen displayed on the display unit 760 to perform the setting (including an input of a set value) of the injection molding machine 10 or the like.

The operation unit 750 and the display unit 760 may be configured of, for example, a touch panel and integrated with eachother. Inaddition, in the present embodiment, the operation unit 750 and the display unit 760 are integrated with each other, but may be provided independently. Moreover, a plurality of operation units 750 may be provided. The operation unit 750 and the display unit 760 are disposed on the negative side in the Y-axis direction of the mold clamping unit 100 (more specifically, the stationary platen 110). The negative side in the Y-axis direction is referred to as the operation side, and the positive side in the Y-axis direction is referred to as the non-operation side.

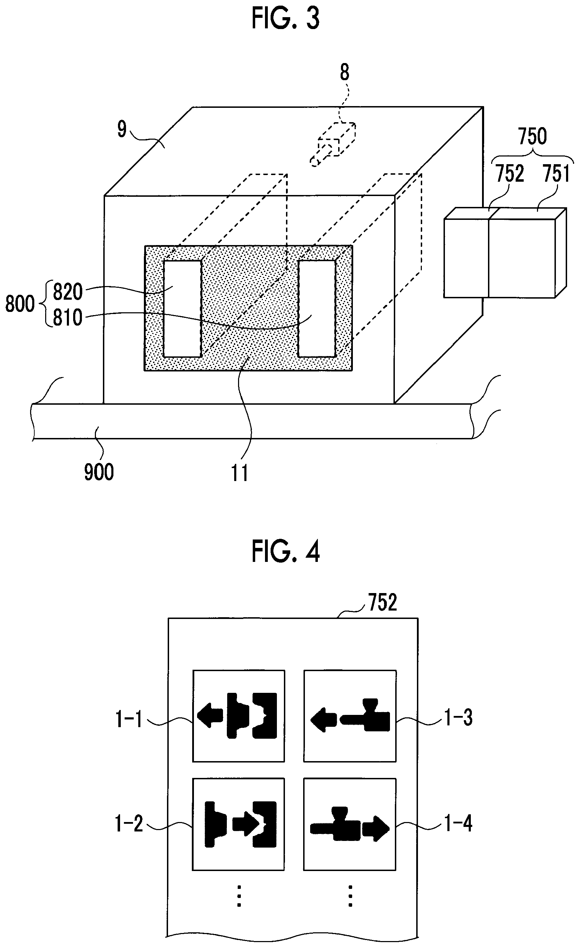

Fig. 3 is a view showing a state in which a slide-type safety cover is attached around the mold unit. Fig. 4 is a view showing an example of operation buttons provided in a second operation section shown in Fig. 3.

As shown in Fig. 3, the mold unit 800 is housed inside a slide-type safety cover 9. An opening portion is formed on the front surface of the slide-type safety cover 9. A transparent projected portion 11 is provided in the opening portion. The projected portion 11 is a plate-shaped member made of transparent synthetic resin such as acrylic or polycarbonate, a plate-shaped member made of glass, or the like.

A projection unit 8 which projects an image onto the projected portion 11 is provided inside the slide-type safety cover 9. The projection unit 8 is fixed to, for example, a ceiling surface inside the slide-type safety cover 9. In addition, an installation place of the projection unit 8 may be a place where the image can be projected onto the projected portion 11 and is not limited to the ceiling surface inside the slide-type safety cover 9.

As shown in Fig. 3, the operation unit 750 is provided on the right side of the slide-type safety cover 9. The operation unit 750 is fixed, for example, on the frame 900 at a position separated from the mold unit 800. In Fig. 3, illustration of a fixing member for fixing the operation unit 750 on the frame 900 is omitted.

The operation unit 750 includes a first operation section 751 provided with a touch panel display and a second operation section 752 provided with a plurality of operation buttons 1-1 to 1-4 shown in Fig. 4. The first operation section 751 is provided with, for example, an input section for a condition input. The input section for the condition input is a touch panel type input section for inputting setting conditions, which are operation conditions set for each process such as mold closing, injection, holding pressure, plasticizing, mold opening, and ejection by the injection molding machine 10. Since the setting conditions are conditions for operating the injection molding machine during molding, the setting conditions are also referred to as molding conditions. In addition, a disposition place of the input section for the condition input is not limited to the first operation section 751, but may be the second operation section 752.

The second operation section 752 is provided between the first operation section 751 and the slide-type safety cover 9 which covers the mold unit 800. In addition, the installation place of the operation unit 750 may be around the mold unit 800 and is not limited to the right side of the slide-type safety cover 9.

As shown in Fig. 4, the second operation section 752 is provided with, for example, the four operation buttons 1-1 to 1-4. Each of the four operation buttons 1-1 to 1-4 is a mechanical button.

The operation button 1-1 is a button for the mold clamping unit 100 to execute the mold opening operation of the mold unit 800.

The operation button 1-2 is a button for the mold clamping unit 100 to execute the mold closing operation of the mold unit 800.

The operation button 1-3 is a button for executing an operation in which the movement unit 400 causes the injection unit 300 to approach the mold unit 800 to cause the nozzle 320 to touch the mold unit 800.

The operation button 1-4 is a button for executing an operation in which the movement unit 400 causes the injection unit 300 to separate from the mold unit 800 to separate the nozzle 320 from the mold unit 800.

Hereinafter, in a case where the four operation buttons 1-1 to 1-4 are not distinguished from each other, the buttons may be referred to as "operation button 1". In addition, a disposition place of the operation buttons 1-1 to 1-4 is not limited to the second operation section 752, but may be the first operation section 751. Moreover, the operation button 1 is not limited to the mechanical button and may be a touch panel type button.

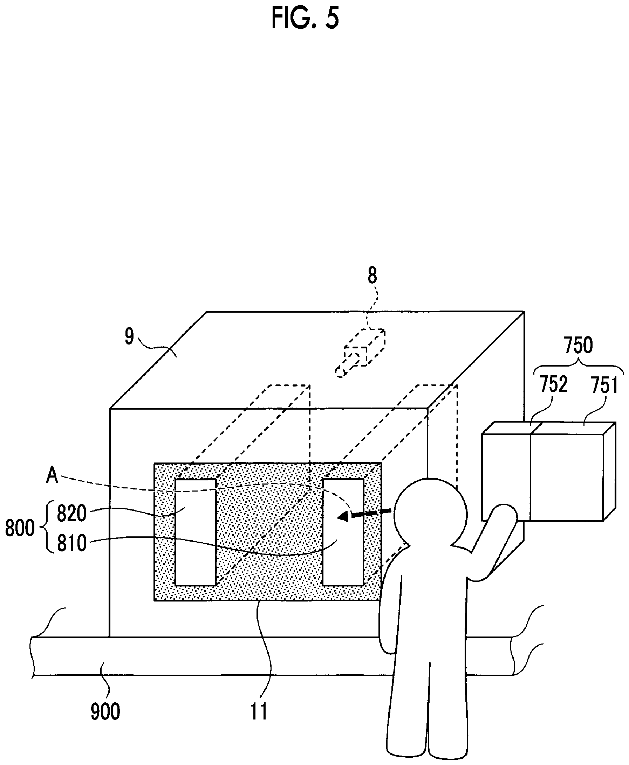

Fig. 5 is a diagram showing a state when the operator of the injection molding machine presses the operation button provided in the second operation section. Fig. 5 shows a scene when an operator presses the operation button 1 provided on the second operation section 752 in a case where work such as initial molding condition setting and positioning of the injection molding machine 10 (hereinafter referred to as work such as molding condition setting) is performed.

Since the operation button 1 on the second operation section 752 is installed at a place separated from the mold unit 800, the operator needs to grope for the operation button 1 and to press a desired operation button 1 while turning a line of sight A toward the mold unit 800 to check an operating state of the mold unit 800 when the work such as molding condition setting is performed.

Therefore, an operator who is unfamiliar with the work such as molding condition setting may press a button other than the desired operation button 1. Accordingly, the mold unit 800 performs an operation different from the operation intended by the operator, and the mold unit 800 may be damaged. Moreover, in the case where the work such as molding condition setting is performed, the work such as molding condition setting may be performed while the desired operation button 1 and the operation of the mold unit 800 after the pressing of the operation button 1 are alternately checked.

In view of the above, the injection molding machine 10 according to the embodiment is configured to display at least an image of the operation button 1 to be pressed by the operator onto the projected portion 11 provided around the mold unit 800. Accordingly, the image of the operation button 1 is displayed on or near the line of sight A of the operator toward the mold unit 800. Therefore, it is possible for the operator to recognize whether the button to be pressed is a desired operation button 1 or a button other than the desired operation button 1 even without visually checking the operation button 1 on the second operation section 752. In addition, a position of the projected portion 11 maybe a position within the visual field of the operator who views the mold unit 800.

Therefore, the risk of pressing a button other than the desired operation button 1 is reduced. As a result, the mold unit 800 can be prevented from performing an operation different from the operation intended by the operator, and thus the mold unit 800 can be prevented from being damaged. Moreover, since the operator does not need to visually check the operation button 1 on the second operation section 752, it is possible to save time and effort to alternately check the operation button 1 on the second operation section 752 and the operation of the mold unit 800, and thus to significantly shorten a work time such as molding condition setting.

In addition, "to be pressed" includes a state before a hand of the operator touches the operation button 1 or a state where the operation button 1 is touched by the hand of the operator but is not pressed down to the end. Since an operation corresponding to a function of the operation button 1 is executed in the injection molding machine 10 when the operation button 1 is pressed down to the end, the operation is not executed until the operation button 1 is pressed down to the end.

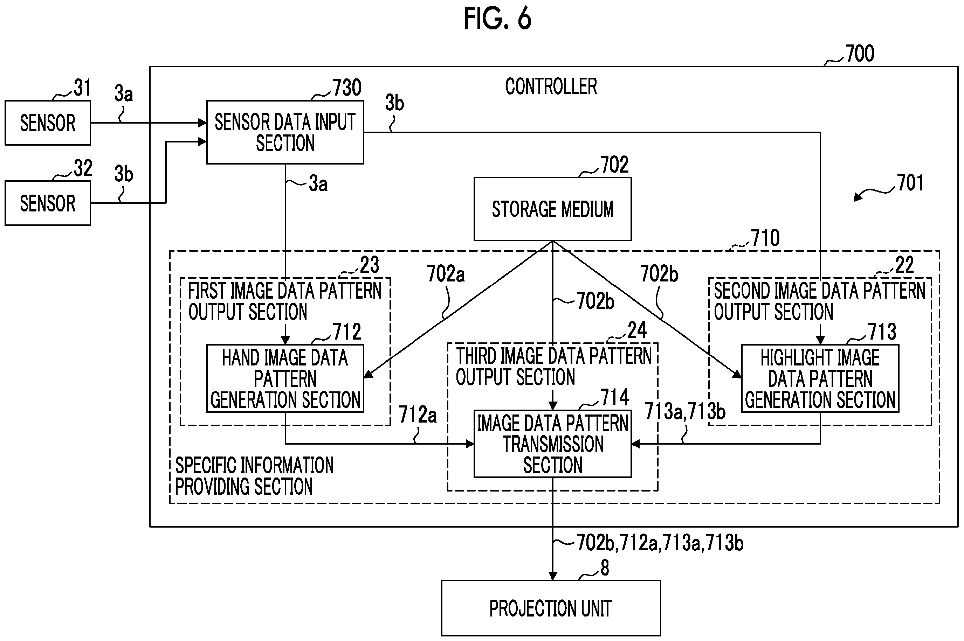

Fig. 6 is a functional block diagram showing components of a controller included in the injection molding machine according to the embodiment. Each functional block shown in Fig. 6 is conceptual and does not necessarily need to be physically configured as shown. All or some of the functional blocks can be configured to be functionally or physically distributed and integrated into predetermined units. All or predetermined some of the processing functions performed in the functional blocks can be realized by a program executed by the CPU 701 shown in Figs. 1 and 2 or as hardware by wired logic.

A sensor 31, a sensor 32, and the projection unit 8 are connected to the controller 700.

The sensor 31 is, for example, a proximity sensor which measures a distance to the hand of the operator. The sensor 31 is provided for each of the plurality of operation buttons 1-1 to 1-4. The sensor 31 is a sensor for specifying the operation button to be pressed by the operator. "To be pressed" includes a state before the hand of the operator touches the operation button 1 or a state where the operation button 1 is touched by the hand of the operator, but is not pressed down to the end. The sensor 31 measures the distance to the hand and inputs distance data indicating the measured distance value to a sensor data input section 730 as data 3a.

The sensor 32 is, for example, a pressure sensor. The sensor 32 is provided for each of the four operation buttons 1-1 to 1-4. The sensor 32 converts a pressure applied to the operation button 1 into a voltage having a different value depending on the magnitude of pressure and inputs voltage data indicating the converted voltage value to the sensor data input section 730 as data 3b.

The controller 700 includes the sensor data input section 730 to which the pieces of data 3a and 3b are input and a specific information providing section 710. The sensor data input section 730 and the specific information providing section 710 are functions realized by the CPU 701 executing a program stored in the storage medium 702. In addition, all or some of these functions may be executed on hardware by wired logic.

The sensor data input section 730 receives the pieces of data 3a and 3b, and transmits the input data 3a to a hand image data pattern generation section 712 and transmits the input data 3b to a highlight image data pattern generation section 713.

The specific information providing section 710 includes a first image data pattern output section 23, a second image data pattern output section 22, a third image data pattern output section 24, the storage medium 702, and an image data pattern transmission section 714 as functions for providing the operator with specific information (an image of the operation button 1, an image of the hand of the operator, or the like) for specifying the operation button 1 to be pressed by the operator.

The first image data pattern output section 23 includes the hand image data pattern generation section 712. The second image data pattern output section 22 includes the highlight image data pattern generation section 713. The third image data pattern output section 24 includes the image data pattern transmission section 714. The second image data pattern output section 22 and the third image data pattern output section 24 output an image data pattern indicating the operation button 1 as the specific information of the operation button 1.

The storage medium 702 holds arrangement information 702a and a button image data pattern 702b. The arrangement information 702a is information representing, for example, an arrangement state of the four operation buttons 1-1 to 1-4 shown in Fig. 4. The button image data pattern 702b is data representing symbols corresponding to the functions of the four operation buttons 1-1 to 1-4. The symbols are, for example, a pattern representing the mold opening process displayed by the operation button 1-1 shown in Fig. 4, a pattern representing the mold closing process displayed by the operation button 1-2, and the like.

The hand image data pattern generation section 712 refers to the arrangement information 702a held by the storage medium 702 to specify positions of the four operation buttons 1-1 to 1-4 based on coordinate positions included in the arrangement information 702a. Then, the hand image data pattern generation section 712 calculates a relative position of the hand of the operator with respect to the position of each of the specified four operation buttons 1-1 to 1-4 based on the input data 3a (distance data) . Finally, the hand image data pattern generation section 712 generates a hand image data pattern 712a indicating the image of the hand at the calculated relative position and inputs the generated hand image data pattern 712a to the image data pattern transmission section 714.

The highlight image data pattern generation section 713 constitutes a highlight display control section which displays an image of the pressed operation button 1 in a highlighted manner compared to an image of the operation button 1 before being pressed in a case where the operation button 1 is pressed.

The highlight image data pattern generation section 713 determines whether or not a voltage value detected by the sensor 32 is equal to or larger than a predetermined set value based on the input data 3b (voltage having a different value depending on the magnitude of pressure) to determine whether the operation button 1 is in the state before being pressed down to the end or whether the operation button 1 is pressed down to the end.

In a case where the operation button 1 is in the state before being pressed down to the end, the highlight image data pattern generation section 713 displays a highlight image indicating the state before the operation button 1 is pressed down to the end. Therefore, the button image data pattern 702b corresponding to the operation button 1 provided with the sensor 32 which is a transmission source of the data 3b is read from the storage medium 702. Then, the highlight image data pattern generation section 713 generates a highlight image data pattern 713a based on the read button image data pattern 702b and symbol data indicating the state before the operation button 1 is pressed down to the end, and inputs the generated highlight image data pattern 713a to the image data pattern transmission section 714. The symbol data is stored in advance in the highlight image data pattern generation section 713 or the storage medium 702. The highlight image data pattern 713a is image data indicating the state before the operation button 1 is pressed down to the end. The highlight image data pattern 713a is one of image data patterns indicating the operation button 1 as the specific information of the operation button 1.

In a case where the operation button 1 is pressed down to the end, the highlight image data pattern generation section 713 displays a highlight image indicating the state where the operation button 1 is pressed down to the end. Therefore, the button image data pattern 702b corresponding to the operation button 1 provided with the sensor 32 which is a transmission source of the data 3b is read from the storage medium 702. Then, the highlight image data pattern generation section 713 generates a highlight image data pattern 713b based on the read button image data pattern 702b and symbol data indicating the state where the operation button 1 is pressed down to the end, and inputs the generated highlight image data pattern 713b to the image data pattern transmission section 714. The symbol data is stored in advance in the highlight image data pattern generation section 713 or the storage medium 702. The highlight image data pattern 713b is image data indicating the state where the operation button 1 is pressed down to the end. The highlight image data pattern 713b is one of image datapatterns indicating the operation button 1 as the specific information of the operation button 1. An image displayed by the highlight image data pattern 713b is realized by expressing the image in a different color, a different symbol, or the like from the symbol of the operation button 1 before being pressed down to the end.

The image data pattern transmission section 714 reads the button image data pattern 702b held by the storage medium 702 and transmits the read pattern to the projection unit 8. That is, the image data pattern transmission section 714 transmits the image data pattern 702b of the operation button 1 for specifying the operation button 1 to be pressed by the operator to the projection unit 8 as the specific information. It is possible to display images of a plurality of operation buttons 1 onto the projected portion 11 by transmitting the button image data pattern 702b to the projection unit 8.

Moreover, the image data pattern transmission section 714 transmits the hand image data pattern 712a input from the hand image data pattern generation section 712 to the projection unit 8. It is possible to display the image of the hand of the operator onto the projected portion 11 by transmitting the hand image data pattern 712a to the projection unit 8.

Moreover, the image data pattern transmission section 714 transmits the highlight image data patterns 713a and 713b input from the highlight image data pattern generation section 713 to the projection unit 8. It is possible to display the highlighted image of the operation button 1 onto the projected portion 11 by transmitting the highlight image data patterns 713a and 713b to the projection unit 8.

The projection unit 8 projects the image of the operation button 1, the image of the hand of the operator, the image of the highlighted operation button 1, or the like onto the projected portion 11 based on each image data pattern from the image data pattern transmission section 714.

Next, an image display operation by the controller 700 will be described.

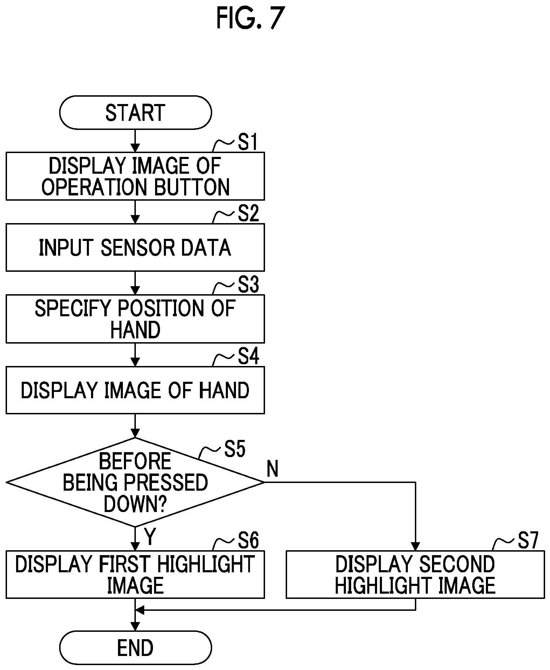

Fig. 7 is a flowchart of image display processing by the controller shown in Fig. 6.

In step S1, the button image data pattern 702b read from the storage medium 702 is input to the image data pattern transmission section 714 and transmitted to the projection unit 8. Accordingly, the images of the plurality of operation buttons 1 are displayed onto the projected portion 11.

In step S2, the pieces of data 3a and 3b from the sensor 3 are input.

In step S3, the position of the hand of the operator with respect to the position of each of the plurality of operation buttons 1 is specified based on the input data 3a (distance data) .

In step S4, the hand image data pattern 712a of the hand at the specified position is input to the image data pattern transmission section 714 and transmitted to the projection unit 8. Accordingly, the image of the hand is displayed onto the projected portion 11.

In step S5, it is determined whether or not the voltage value is equal to or larger than the predetermined set value based on the input data 3b (voltage having a different value depending on the magnitude of pressure) to determine whether or not the operation button 1 is in the state before being pressed down to the end.

In the case where the operation button 1 is in the state before being pressed down to the end (Yes in step S5), the highlight image data pattern 713a is input to the image data pattern transmission section 714 and transmitted to the projection unit 8. Accordingly, the image of the operation button 1 before being pressed down to the end (first highlight image) is displayed onto the projected portion 11 (step S6).

In a case where the operation button 1 is not in the state before being pressed down to the end, that is, in the case where the operation button 1 is pressed down to the end (No in step S5), the highlight image data pattern 713b is input to the image data pattern transmission section 714 and transmitted to the projection unit 8. Accordingly, the image of the operation button 1 pressed down to the end (second highlight image) is displayed onto the projected portion 11 (step S7).

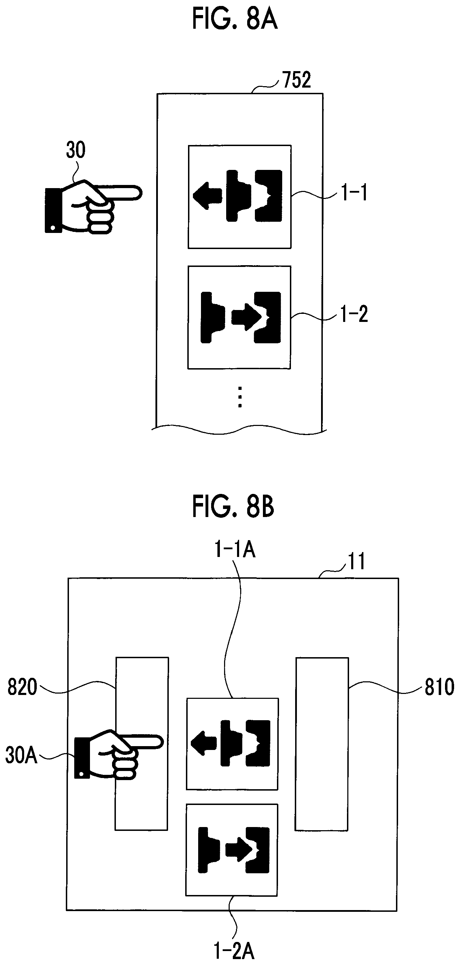

A specific example of the image to be displayed onto the projected portion 11 in this manner will be described with reference to Figs. 8 to 10.

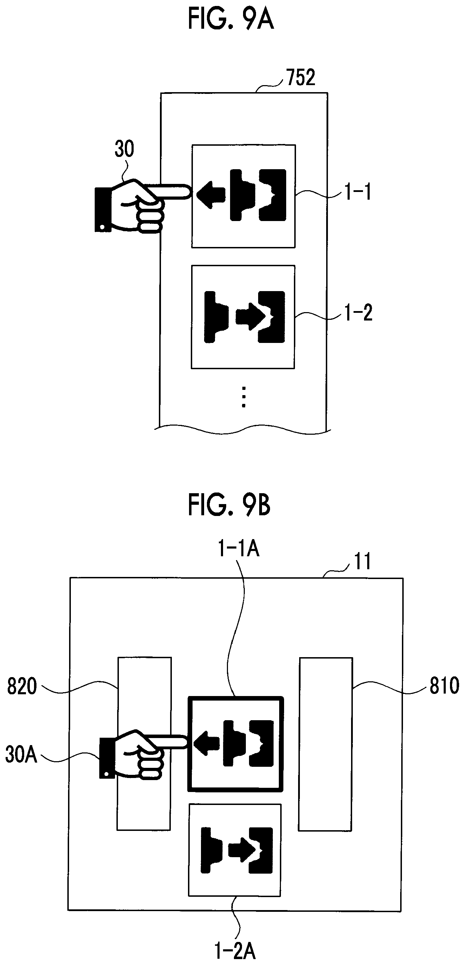

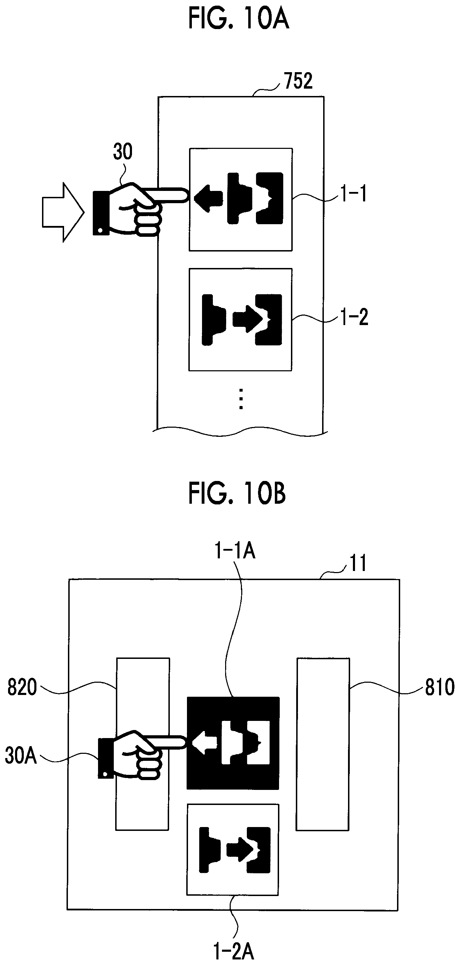

Figs. 8A and 8B are views for describing a first display example of operation button images. Figs. 9A and 9B are views for describing a second display example of the operation button images . Figs. 10A and 10B are views for describing a third display example of the operation button images.

Fig. 8A, Fig. 9A, and Fig. 10A show the operation buttons 1-1 and 1-2 provided on the second operation section 752. Fig. 8B, Fig. 9B, and Fig. 10B show examples of images to be displayed onto the projected portion 11.

In a case where a hand 30 of the operator is about to press the operation button 1-1 as shown in Fig. 8A, an image 30A of the hand 30 of the operator, an image 1-1A of the operation button 1-1, and an image 1-2A of the operation button 1-2 are displayed onto the projected portion 11 as shown in Fig. 8B.

Thereafter, in a case where the hand 30 of the operator touches the operation button 1-1 as shown in Fig. 9A, a thick solid frame is combined with the image 1-1A of the operation button 1-1 as shown in Fig. 9B. In this manner, the first highlight image (image of the operation button 1 which is touched by the hand of the operator but before being pressed down to the end) is displayed onto the projected portion 11.

Moreover, in a case where the operation button 1-1 is pressed down to the end as shown in Fig. 10A, the image 1-1A of the operation button 1-1 is switched, for example, from an outline in white background to an outline in black background as shown in Fig. 10B. In this manner, the second highlight image (the image of the operation button 1 pressed down to the end) is displayed onto the projected portion 11.

As described above, the operation unit 750 of the injection molding machine 10 has the plurality of operation buttons 1, and the controller 700 of the injection molding machine 10 has the specific information providing section 710 which provides an operator with the specific information (the image of the operation button 1, the image of the hand of the operator, or the like) for specifying the operation buttons 1 to be pressed by the operator.

With this configuration, it is possible to display the images of the operation buttons 1-1, 1-2, and the like onto the projected portion 11 and to display the image of the hand of the operator onto the projected portion 11. Therefore, it is possible for the operator to recognize whether the button to be pressed is the desired operation button 1 or a button other than the desired operation button 1 from a relationship between a position of the image of the hand to be displayed onto the projected portion 11 and positions of the operation buttons 1-1, 1-2, and the like even without visually check the operation button 1 on the second operation section 752. Therefore, the risk of pressing a button other than the desired operation button 1 is reduced. As a result, the mold unit 800 can be prevented from performing an operation different from the operation intended by the operator, and thus the mold unit 800 can be prevented from being damaged.

Moreover, with the controller 700, it is no longer necessary to check alternately the operation button 1 on the second operation section 752 and the operation of the mold unit 800 since the operation button 1 to be pressed can be specified by the image to be displayed onto the projected portion 11. Therefore, since the position of the desired operation button 1 can be quickly specified and pressed, it is possible to significantly shorten the work time such as molding condition setting.

Moreover, with the controller 700, the image 1-1A of the operation button 1-1 is highlighted as shown in Fig. 9B, and thus the operation button 1-1 touched by the hand of the operator becomes clear. Therefore, it is possible for the operator to check whether or not the touched button is the desired operation button 1 before the operation button 1 is pressed down. As a result, it is possible to further reduce the risk of pressing a button other than the desired operation button 1 and thus to further prevent the damage of the mold unit 800 as compared with the case where the button is not highlighted.

Moreover, with the controller 700, the image 1-1A of the operation button 1-1 is highlighted as shown in Fig. 10B, and thus the operation button 1-1 pressed by the operator becomes clear. Therefore, it is possible for the operator to recognize the operation button 1 corresponding to the operation of the injection molding machine 10 even without visually checking the pressed operation button 1. As a result, it is possible to save time and effort to alternately check the operation button 1 and the operation of the mold unit 800 and thus to significantly shorten the work time such as molding condition setting.

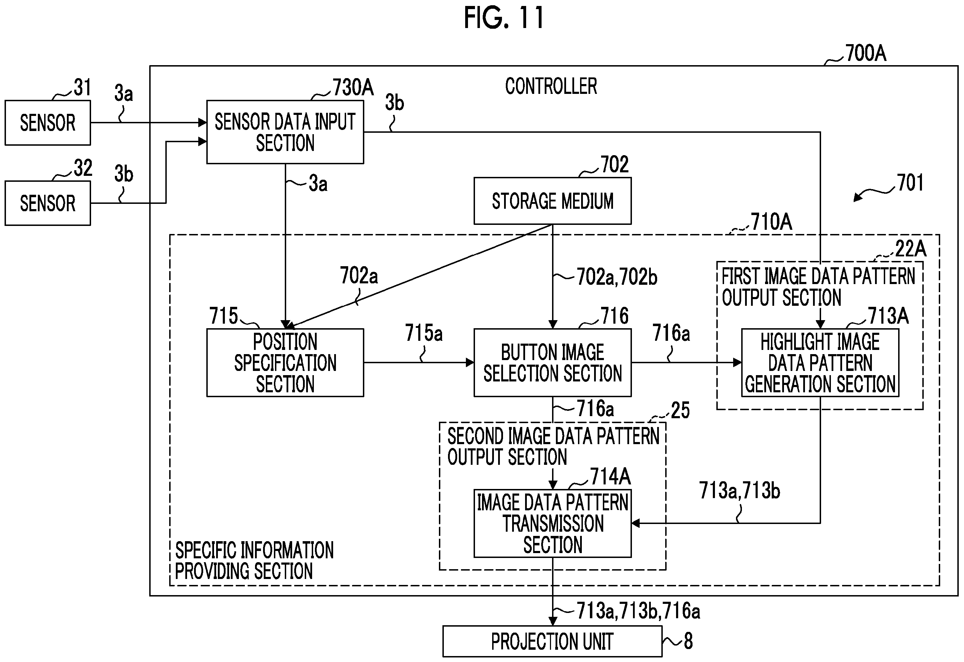

In addition, display contents of the images onto the projected portion 11 are not limited to the display examples of Figs. 8 to 10. For example, the image of the hand of the operator may be omitted and only the operation button 1 may be displayed. A configuration example in which only the operation button 1 is displayed will be described with reference to Fig. 11.

Fig. 11: is a functional block diagram showing components according to a first modification example of the controller included in the injection molding machine according to the embodiment. A controller 700A shown in Fig. 11 includes a specific information providing section 710A instead of the specific information providing section 710 in Fig. 6.

The sensor 31, the sensor 32, and the projection unit 8 are connected to the controller 700A.

The sensor 31 is, for example, a proximity sensor which measures a distance to the hand of the operator. The sensor 31 is provided for each of the plurality of operation buttons 1-1 to 1-4. The sensor 31 is a sensor for specifying the operation button to be pressed by the operator. "To be pressed" includes a state before the hand of the operator touches the operation button 1 or a state where the operation button 1 is touched by the hand of the operator, but is not pressed down to the end. The sensor 31 measures the distance to the hand and inputs distance data indicating the measured distance value to a sensor data input section 730 as data 3a.

The sensor 32 is, forexample, a pressure sensor. The sensor 32 is provided for each of the four operation buttons 1-1 to 1-4. The sensor 32 converts a pressure applied to the operation button 1 into a voltage having a different value depending on the magnitude of pressure and inputs voltage data indicating the converted voltage value to a sensor data input section 730A as the data 3b.

The controller 700A includes the sensor data input section 730A and the specific information providing section 710A. The sensor data input section 730A and the specific information providing section 710A are functions realized by the CPU 701 executing a program stored in the storage medium 702. In addition, all or some of these functions may be executed on hardware by wired logic.

The sensor data input section 730A receives the pieces of data 3a and 3b, and transmits the input data 3a to a position specification section 715 and transmits the input data 3b to a highlight image data pattern generation section 713A.

The specific information providing section 710A includes a first image data pattern output section 22A, a second image data pattern output section 25, the position specification section 715, a button image selection section 716, and the storage medium 702 as functions for providing the operator with specific information (image of the operation button 1) for specifying the operation button 1 to be pressed by the operator.

The first image data pattern output section 22A includes the highlight image data pattern generation section 713A. The second image data pattern output section 25 includes an image data pattern transmission section 714A.

The position specification section 715 refers to the arrangement information 702a held by the storage medium 702 to specify positions of the four operation buttons 1-1 to 1-4 based on coordinate positions included in the referenced arrangement information 702a. Then, the position specification section 715 calculates a relative position of the hand of the operator with respect to the position of each of the specified four operation buttons 1-1 to 1-4 based on the input data 3a (distance data) . Finally, the position specification section 715 generates relative position information 715a which represents the calculated relative position of the hand and inputs the relative position information 715a to the button image selection section 716.

When the relative position information 715a is input, the button image selection section 716 refers to the arrangement information 702a held in the storage medium 702 to collate the relative position of the hand included in the relative position information 715a from the position specification section 715 with the coordinate position included in the referenced arrangement information 702a. Accordingly, for example, the operation button 1 closest to the position of the hand of the operator is selected from the four operation buttons 1-1 to 1-4 shown in Fig. 4. Then, the button image selection section 716 reads a button image data pattern 702b corresponding to the selected operation button 1 from the storage medium 702 and inputs the read button image data pattern 702b to the highlight image data pattern generation section 713A and the image data pattern transmission section 714A as a button image data pattern 716a.

The highlight image data pattern generation section 713A constitutes a highlight display control section which displays an image of the pressed operation button 1 in a highlighted manner compared to an image of the operation button 1 before being pressed in a case where the operation button 1 is pressed.

First, the highlight image data pattern generation section 713A determines whether or not a voltage value detected by the sensor 32 is equal to or larger than a predetermined set value based on the input data 3b (voltage having a different value depending on the magnitude of pressure) to determine whether the operation button 1 is in the state before being pressed down to the end or whether the operation button 1 is pressed down to the end.

In the case where the operation button 1 is in the state before being pressed down to the end, the highlight image data pattern generation section 713A displays a highlight image indicating the state before the operation button 1 is pressed down to the end. Therefore, a highlight image data pattern 713a is generated based on the button image data pattern 716a from the button image selection section 716 and the symbol data indicating the state before the operation button 1 is pressed down to the end, and is input to the image data pattern transmission section 714A. The symbol data is stored in advance in the highlight image data pattern generation section 713A or the storage medium 702. The highlight image data pattern 713a is image data indicating the state before the operation button 1 is pressed down to the end.

In the case where the operation button 1 is pressed down to the end, the highlight image data pattern generation section 713A displays a highlight image indicating the state where the operation button 1 is pressed down to the end. Therefore, a highlight image data pattern 713b is generated based on the button image data pattern 716a from the button image selection section 716 and the symbol data indicating the state before the operation button 1 is pressed down to the end, and is input to the image data pattern transmission section 714A. The symbol data is stored in advance in the highlight image data pattern generation section 713A or the storage medium 702. The highlight image data pattern 713b is image data indicating the state where the operation button 1 is pressed down to the end. An image displayed by the highlight image data pattern 713b is realized by expressing the image in a different color, a different symbol, or the like from the symbol of the operation button 1 before being pressed down to the end.

The image data pattern transmission section 714A transmits the button image data pattern 716a input from the button image selection section 716 to the projection unit 8. That is, the image data pattern transmission section 714A transmits the image data of the operation button 1 for specifying the operation button 1 to be pressed by the operator to the projection unit 8 as the specific information. It is possible to display the image of the operation button 1 to be operated by the operator onto the projected portion 11 by transmitting the button image data pattern 716a to the projection unit 8.

Moreover, the image data pattern transmission section 714A transmits the highlight image data patterns 713a and 713b input from the highlight image data pattern generation section 713A to the projection unit 8. It is possible to display the highlighted image of the operation button 1 onto the projected portion 11 by transmitting the highlight image data patterns 713a and 713b to the projection unit 8.

The projection unit 8 projects the image of the operation button 1 to be operated by the operator, the highlighted image of the operation button 1, or the like onto the projected portion 11 based on each piece of image data from the image data pattern transmission section 714A.

Next, an image display operation by the controller 700A will be described.

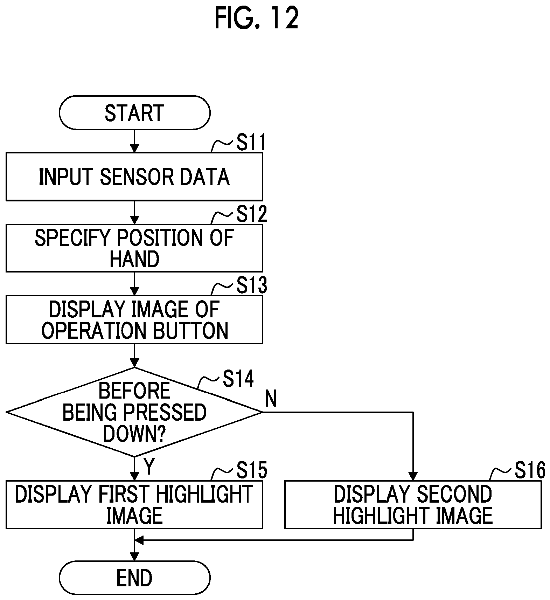

Fig. 12 is a flowchart of image display processing by the controller shown in Fig. 11.

In step S11, the pieces of data 3a and 3b from the sensor 3 are input.

In step S12, the position of the hand of the operator with respect to the position of each of the four operation buttons 1-1 to 1-4 is specified based on the input data 3a (distance data).

In step S13, the relative position of the hand included in the relative position information 715a is collated with the coordinate position included in the arrangement information 702a to select the operation button 1 closest to the position of the hand of the operator from the four operation buttons 1-1 to 1-4 shown in Fig. 4. Then, a button image data pattern 702b corresponding to the selected operation button 1 is read from the storage medium 702, and the read button image data pattern 702b is input to the image data pattern transmission section 714A as the button image data pattern 716a. The button image data pattern 716a input to the image data pattern transmission section 714A is transmitted to the projection unit 8, and thus the image of the operation button 1 closest to the position of the hand of the operator is displayed onto the projected portion 11 by transmitting.

In step S14, it is determined whether or not the voltage value is equal to or larger than the predetermined set value based on the input data 3b (voltage having a different value depending on the magnitude of pressure) to determine whether or not the operation button 1 is in the state before being pressed down to the end.

In the case where the operation button 1 is in the state before being pressed down to the end (Yes in step S14), the highlight image data pattern 713a is input to the image data pattern transmission section 714A and transmitted to the projection unit 8. Accordingly, the image (first highlight image) of the operation button 1 before being pressed down to the end is displayed onto the projected portion 11 (step S15) .

In the case where the operation button 1 is not in the state before being pressed down to the end, that is, in the case where the operation button 1 is pressed down to the end (No in step S14), the highlight image data pattern 713b is input to the image data pattern transmission section 714A and transmitted to the projection unit 8. Accordingly, the image (second highlight image) of the operation button 1 pressed down to the end is displayed onto the projected portion 11 (step S16).

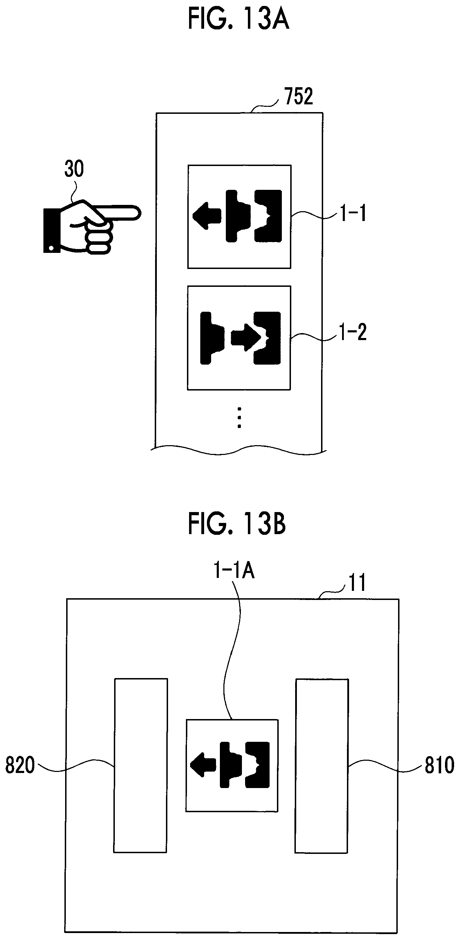

A specific example of the image to be displayed onto the projected portion 11 in this manner will be described with reference to Figs. 13 to 15.

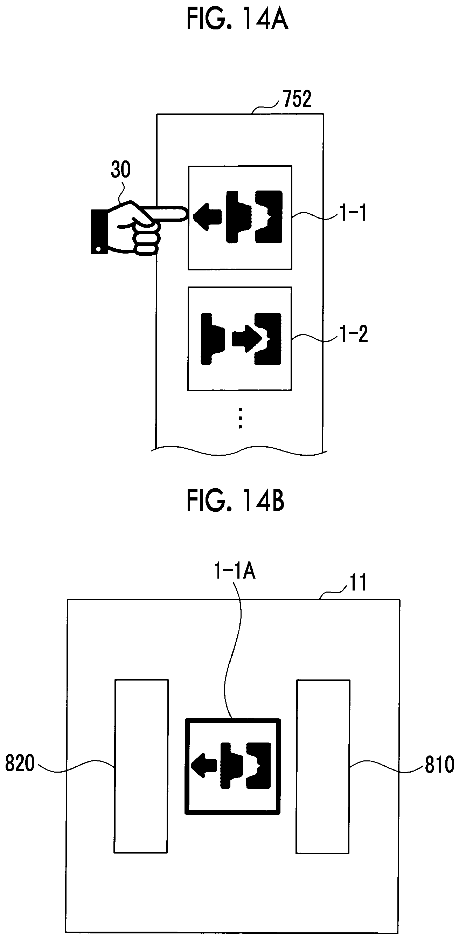

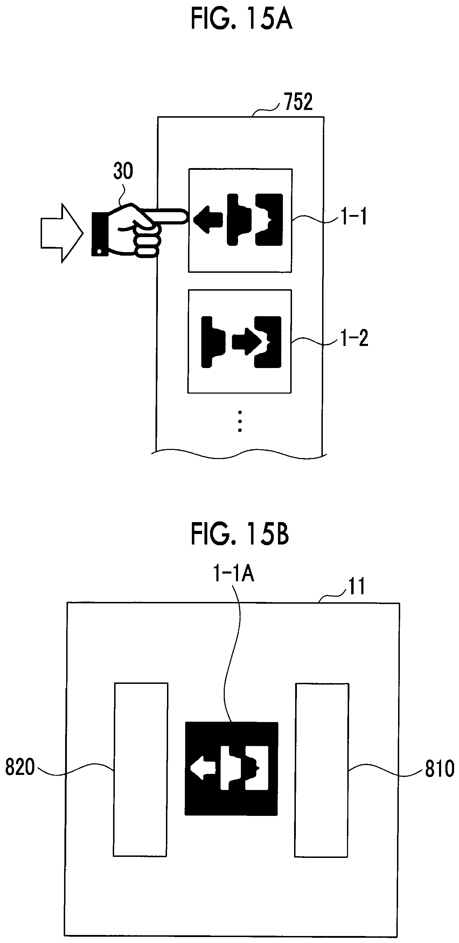

Figs. 13A and 13B are views for describing a fourth display example of the operation button images. Figs. 14A and 14B are views for describing a fifth display example of the operation button images . Figs. 15A and 15B are views for describing a sixth display example of the operation button images.

Fig. 13A, Fig. 14A, and Fig. 15A show the operation buttons 1-1 and 1-2 provided on the second operation section 752. Figs. 13B, 14B, and 15B show examples of images displayed onto the projected portion 11.

For example, in the case where the hand 30 of the operator is about to press the operation button 1-1 as shown in Fig. 13A, the image 1-1A of the operation button 1-1 is displayed onto the projected portion 11 as shown in Fig. 13B.

Thereafter, for example, when the hand 30 of the operator touches the operation button 1-1 as shown in Fig. 14A, a thick solid frame is combined with the image 1-1A of the operation button 1-1 as shown in Fig. 14B. In this manner, the first highlight image (the image of the operation button 1 before being pressed down to the end) is displayed onto the projected portion 11.

Moreover, in the case where the operation button 1-1 is pressed down to the end as shown in Fig. 15A, the image 1-1A of the operation button 1-1 is switched, for example, from the outline in white background to the outline in black background as shown in Fig. 15B. In this manner, the second highlight image (the image of the operation button 1 pressed down to the end) is displayed onto the projected portion 11.

As described above, the operation unit 750 of the injection molding machine 10 has the plurality of operation buttons 1, and the controller 700 of the injection molding machine 10 has the specific information providing section 710A which provides an operator with the specific information (the image of operation button 1) for specifying the operation buttons 1 to be pressed by the operator.

With this configuration, it is possible to display the image 1-1A of the operation button 1-1 to be pressed by the hand of the operator onto the projected portion 11. Therefore, it is possible for the operator to recognize that the button to be pressed is the operation button 1-1 without visually checking the operation button 1 on the second operation section 752. Therefore, the risk of pressing a button other than the desired operation button 1 is reduced. As a result, the mold unit 800 can be prevented from performing an operation different from the operation intended by the operator, and the mold unit 800 can be prevented from being damaged.

Moreover, with the controller 700A, since only the image of the operation button 1 to be pressed by the hand of the operator can be displayed, it is possible to reduce the load of the image display processing of the controller 700A and thus to display the image of the operation button 1 without delay with respect to the movement of the hand of the operator.

Moreover, with the controller 700A, a relatively low processor in processing the image display can be used for the controller 700A due to the reduction in the load of the image display processing by displaying only the image of the operation button 1 to be pressed by the hand of the operator. Therefore, it is possible to reduce the manufacturing cost of the controller 700A.

Moreover, with the controller 700A, the image 1-1A of the operation button 1-1 is highlighted as shown in Fig. 14B, and thus the operation button 1-1 touched by the hand of the operator becomes clear. Therefore, it is possible for the operator to check whether or not the touched button is the desired operation button 1 before the operation button 1 is pressed down. As a result, it is possible to further reduce the risk of pressing a button other than the desired operation button 1 and thus to further prevent the damage of the mold unit 800 as compared with the case where the button is not highlighted.

Moreover, with the controller 700A, the image 1-1A of the operation button 1-1 is highlighted as shown in Fig. 15B, and thus the operation button 1-1 pressed by the operator becomes clear. Therefore, it is possible for the operator to recognize the operation button 1 corresponding to the operation of the injection molding machine 10 even without visually checking the pressed operation button 1. As a result, it is possible to save time and effort to alternately check the operation button 1 and the operation of the mold unit 800 and thus to significantly shorten the work time such as molding condition setting.

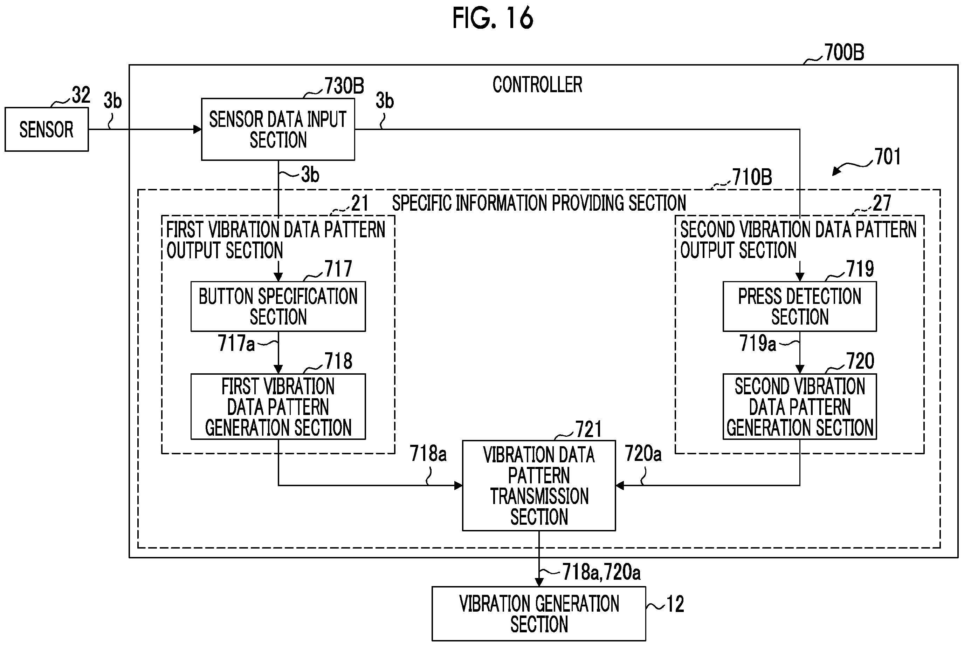

So far, the configuration example in the case of displaying the image of the operation button 1 or the like as the specific information for specifying the operation button 1 to be pressed by the operator has been described. However, the specific information may be a vibration of the operation button 1 other than the image of the operation button 1. The embodiments where the specific information may be a vibration of the operation button do not fall within the scope of the claims are not part of the invention and are to be considered merely as examples for understanding the invention. A configuration example for providing such specific information will be described with reference to Fig. 16.

Fig. 16 is a functional block diagram showing components according to a second modification example of the controller included in the injection molding machine according to the embodiment. A controller 700B shown in Fig. 16 includes a specific information providing section 710B instead of the specific information providing section 710 in Fig. 6.

The sensor 32 and a vibration generation section 12 are connected to the controller 700B.

The sensor 32 is, forexample, a pressure sensor. The sensor 32 is provided for each of the four operation buttons 1-1 to 1-4. The sensor 32 converts a pressure applied to the operation button 1 into a voltage having a different value depending on the magnitude of pressure and inputs voltage data indicating the converted voltage value to a sensor data input section 730B as the data 3b.

The vibration generation section 12 is provided for each of the plurality of operation buttons. The vibration generation section 12 is a vibration generation means which causes each of the plurality of operation buttons 1 to vibrate at a different cycle in order for the operator to recognize a type of the button (for example, whether the button is a mold opening button or a mold closing button) when the operator touches the operation button 1.

Moreover, the vibration generation section 12 changes the type of the vibration of the operation button 1 before and after being pressed down to the end in order for the operator to recognize that the operation button 1 is pressed down to the end in the case where the operation button 1 is pressed down to the end.

The controller 700B includes the sensor data input section 730B and the specific information providing section 710B. The sensor data input section 730B and the specific information providing section 710B are functions realized by the CPU 701 executing a program stored in the storage medium 702 shown in Fig. 1. In addition, all or some of these functions may be executed on hardware by wired logic.

The sensor data input section 730B receives the data 3b and transmits the input data 3b to a button specification section 717 and a press detection section 719.

The specific information providing section 710B includes a first vibration data pattern output section 21, a second vibration data pattern output section 27, and a vibration data pattern transmission section 721 as functions for providing the operator with specific information (vibration of the operation button 1) for specifying the operation button 1 to be pressed by the operator.

The first vibration data pattern output section 21 includes the button specification section 717 and a first vibration data pattern generation section 718. The second vibration data pattern output section 27 includes a press detection section 719 and a second vibration data pattern generation section 720.

The button specification section 717 and the first vibration data pattern generation section 718 constitute a button vibration control section which causes each of the plurality of operation buttons 1 to vibrate at a different cycle.

The button specification section 717 specifies the type of the operation button 1 touched by the hand of the operator based on the input data 3b (voltage having a different value depending on the magnitude of pressure), generates button specification information 717a which is information indicating the type of the specified operation button 1, and inputs the generated button specification information 717a to the first vibration data pattern generation section 718. For example, the button specification section 717 stores button specification table information for specifying the operation button 1.

In the button specification table information, for example, an identification number of each of the plurality of operation buttons 1 is associated with an identification number of the sensor 32 provided in each of the plurality of operation buttons 1.

The button specification section 717 which receives the data 3b refers to the button specification table information to specify the identification number of the operation button 1 provided with the sensor 32 which is the transmission source of the data 3b.

It is possible to specify the type of the operation button 1 by specifying the identification number of the operation button 1. Therefore, the button specification section 717 inputs the button specification information 717a which is the information indicating the type of the specified operation button 1 to the first vibration data pattern generation section 718.

The first vibration data pattern generation section 718 generates a first vibration data pattern 718a for causing each of the plurality of operation buttons to vibrate at a different cycle based on the button specification information 717a and inputs the generated first vibration data pattern 718a to the vibration data pattern transmission section 721 in order for the operator to recognize a type of the button (for example, whether the button is a mold opening button or a mold closing button) when the operator touches the operation button 1.

For example, the first vibration data pattern generation section 718 stores vibration table information for generating vibration signals having different cycles. In the vibration table information, the identification number of each of the plurality of operation buttons 1 is associated with vibration information representing different vibration patterns.

The first vibration data pattern generation section 718 which receives the button specification information 717a refers to the vibration table information to read the vibration information corresponding to the identification number of the operation button 1, generates the first vibration data pattern 718a based on the read vibration information, and inputs the generated first vibration data pattern 718a to the vibration data pattern transmission section 721.

For example, in a case where the operation button 1-1 shown in Fig. 4 is pressed, the first vibration data pattern generation section 718 generates a first intermittent vibration signal as the first vibration data pattern 718a based on the vibration information corresponding to the operation button 1-1. The first intermittent vibration is, for example, an intermittent vibration in which a signal generation period and a signal pause period generated by a 100 Hz signal are alternately continued.

Moreover, in a case where the operation button 1-2 shown in Fig. 4 is pressed, the first vibration data pattern generation section 718 generates a second intermittent vibration signal to the first vibration data pattern 718a based on the vibration information corresponding to the operation button 1-2. The second intermittent vibration is, for example, an intermittent vibration in which a signal generation period and a signal pause period generated by a 200 Hz signal are alternately continued.

The press detection section 719 determines whether or not a voltage value detected by the sensor 32 is equal to or larger than a predetermined set value to determine whether the operation button 1 is in a state before being pressed down to the end or pressed down to the end.

When that the operation button 1 is determined to be pressed down to the end, the press detection section 719 generates a press detection signal 719a and inputs the generated press detection signal 719a to the second vibration data pattern generation section 720.

The press detection signal 719a is, for example, a signal for causing the operation button 1 to continuously vibrate at 1 kHz in order for the operator to recognize that the operation button 1 is pressed down to the end.

The second vibration data pattern generation section 720 which receives the press detection signal 719a generates, for example, a second vibration data pattern 720a for causing the pressed operation button 1 to continuously vibrate and inputs the generated second vibration data pattern 720a to the vibration data pattern transmission section 721.

The vibration data pattern transmission section 721 transmits the input first vibration data pattern 718a and second vibration data pattern 720a to the vibration generation section 12.

For example, in the case where the operation button 1-1 shown in Fig. 4 is pressed, the first intermittent vibration signal (first vibration data pattern 718a) generated by the first vibration data pattern generation section 718 is transmitted to the vibration generation section 12 provided in the operation button 1-1. Accordingly, the first intermittent vibration is applied to the operation button 1-1. The first intermittent vibration is, for example, an intermittent vibration in which the signal generation period and the signal pause period generated by a 100 Hz signal are alternately continued.

Moreover, in the case where the operation button 1-2 shown in Fig. 4 is pressed, the second intermittent vibration signal (first vibration data pattern 718a) generated by the first vibration data pattern generation section 718 is transmitted to the vibration generation section 12 provided in the operation button 1-2. Accordingly, the second intermittent vibration is applied to the operation button 1-2. The second intermittent vibration is, for example, an intermittent vibration in which the signal generation period and the signal pause period generated by a 200 Hz signal are alternately continued.

Moreover, in the case where the operation button 1-1 is pressed down to the end shown in Fig. 4, the vibration generation section 12 provided in the operation button 1-1 applies, for example, 1 kHz continuous vibration to the operation button 1-1.

Next, an operation by the controller 700B will be described.

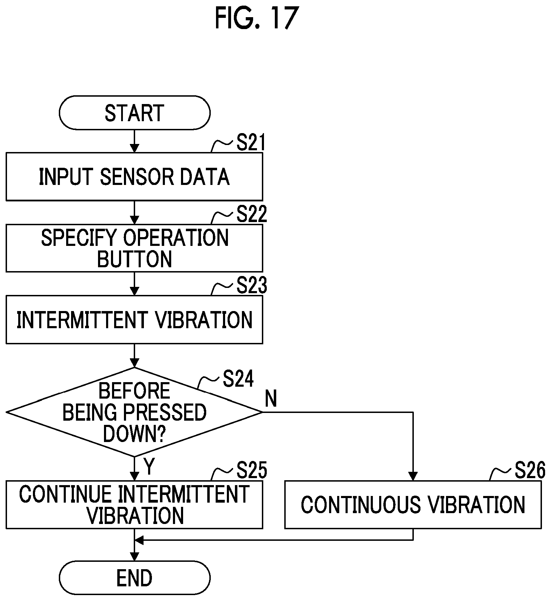

Fig. 17 is a flowchart of vibration processing by the controller shown in Fig. 16.

In step S21, the data 3b from the sensor 3 is input.

In step S22, the type of the operation button 1 touched by the hand of the operator is specified based on the input data 3b (voltage having a different value depending on the magnitude of pressure).

In step S23, the first vibration data pattern 718a for causing each of the plurality of operation buttons to vibrate at a different cycle is generated based on the button specification information 717a in order for the operator to recognize the type of the operation button 1 touched by the operator (for example, whether the button is a mold opening button or a mold closing button). Then, the first vibration data pattern 718a is transmitted to the vibration generation section 12 through the vibration data pattern transmission section 721 to, for example, intermittently vibrate the operation button 1 touched by the operator.

In step S24, it is determined whether or not the voltage value is equal to or larger than the predetermined set value based on the input data 3b (voltage having a different value depending on the magnitude of pressure) to determine whether or not the operation button 1 is in the state before being pressed down to the end.

In the case where the operation button 1 is in the state before being pressed down to the end (Yes in step S24), the second vibration data pattern 720a is not generated. Therefore, the intermittent vibration is continued by the first vibration data pattern 718a (step S25).

In the case where the operation button 1 is not in the state before being pressed down to the end, that is, in the case where the operation button 1 is pressed down to the end (No in step S24), the second vibration data pattern 720a is transmitted to the vibration generation section 12 through the vibration data pattern transmission section 721 to, for example, continuously vibrate the pressed operation button 1 (step S26).

As described above, the operation unit 750 of the injection molding machine 10 has the plurality of operation buttons 1, and the controller 700 of the injection molding machine 10 has the specific information providing section 710B which provides an operator with the specific information (the vibration of operation button 1) for specifying the operation buttons 1 to be pressed by the operator. The specific information providing section 710B is configured to generate the first vibration data pattern 718a for causing each of the plurality of operation buttons to vibrate at a different cycle and input the generated first vibration data pattern 718a to the vibration generation section 12.

With this configuration, it is possible for the operator to recognize whether the pressed button is the desired operation button 1 or a button other than the desired operation button 1 based on the difference in the vibration of the pressed operation button 1.

Moreover, even in a case where a button other than the desired operation button 1 is touched, it is possible for the operator to immediately notice a mistake in pressing and press the desired operation button 1 again. As a result, the mold unit 800 can be prevented from performing an operation different from the operation intended by the operator, and thus the mold unit 800 can be prevented from being damaged.

Moreover, with the controller 700B, it is possible to inform the operator that the operation button 1 is pressed down by generating a vibration different from the vibration before being pressed when the operation button 1-1 is pressed down. Therefore, it is possible for the operator to recognize the operation button 1 corresponding to the operation of the injection molding machine 10 even without visually checking the pressed operation button 1. As a result, it is possible to save time and effort to alternately check the operation button 1 and the operation of the mold unit 800 and thus to significantly shorten the work time such as molding condition setting.

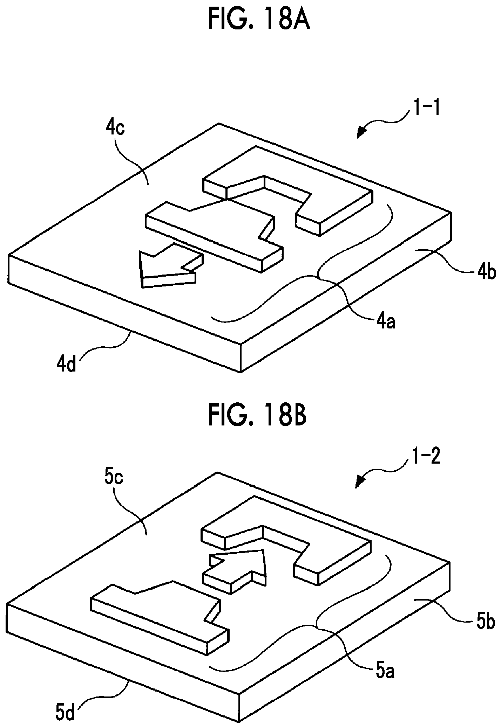

In Fig. 16, the case where the specific information for specifying the operation button 1 to be pressed by the operator is the vibration of the operation button 1 is described. However, it is possible for the operator to specify the operation button 1 to be pressed, by changing a surface shape of the operation button 1 instead of the vibration. A configuration example for providing such specific information will be described with reference to Fig. 18.

Figs. 18A and 18B are views showing an example of a design portion formed on the front surface of the operation buttons 1-1 and 1-2.

The operation button 1-1 shown in Fig. 18A includes a base portion 4b and a design portion 4a formed on a front surface 4c of the base portion 4b. The front surface 4c of the base portion 4b is a portion which is touched by the hand of the operator. The design portion 4a is a symbol (for example, a pattern representing the mold opening process) corresponding to the function of the operation button 1-1. The design portion 4a protrudes in a direction from a back surface 4d toward the front surface 4c of the base portion 4b of the operation button 1-1.

The operation button 1-2 shown in Fig. 18B includes a base portion 5b and a design portion 5a formed on a front surface 5c of the base portion 5b. The front surface 5c of the base portion 5b is a portion touched by the hand of the operator.

The design portion 5a is a symbol (for example, a pattern representing the mold closing process) corresponding to the function of the operation button 1-2. The design portion 5a protrudes in a direction from a back surface 5d toward the front surface 5c of the base portion 5b of the operation button 1-2.

As described above, the design portions 4a and 5a are provided in the operation buttons 1-1 and 1-2 (the front surface 4c of the base portion 4b and the front surface 5c of the base portion 5b) touched by the hand of the operator. Therefore, it is possible for the operator to recognize whether the pressed button is the desired operation button 1 or a button other than the desired operation button 1 based on the difference in the surface shape of the pressed operation button 1.

Moreover, even in a case where a button other than the desired operation button 1 is touched, it is possible for the operator to immediately notice a mistake in pressing and press the desired operation button 1 again. As a result, the mold unit 800 can be prevented from performing an operation different from the operation intended by the operator, and thus the mold unit 800 can be prevented from being damaged.

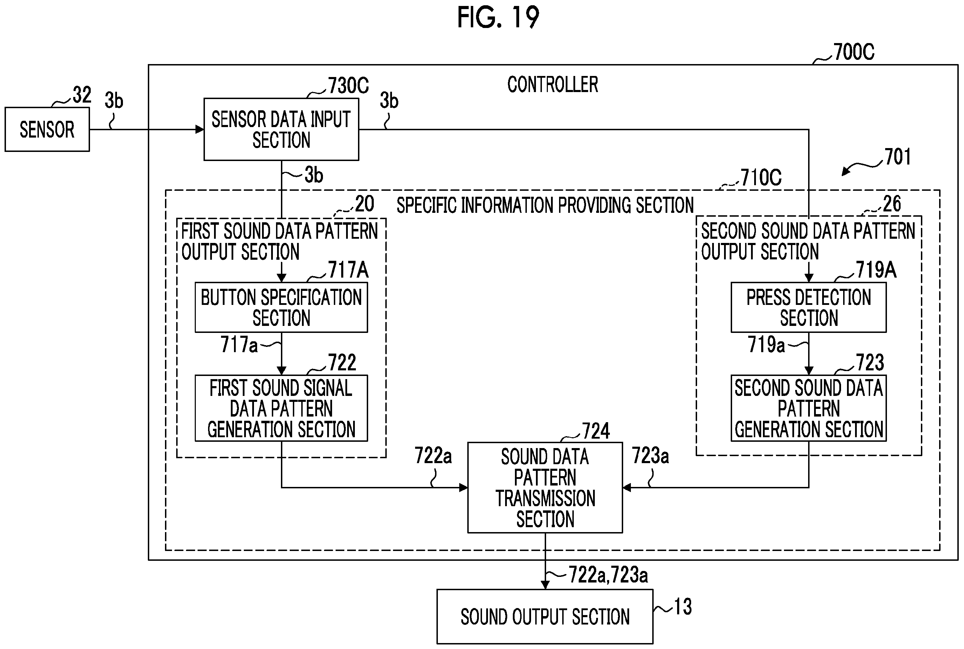

So far, the image, vibration, shape, and the like of the operation button 1 have been described as the specific information for specifying the operation button 1 to be pressed by the operator. However, the specific information may be a sound in addition to the image, vibration, shape, or the like of the operation button 1. The embodiments where the specific information may be a sound do not fall within the scope of the claims are not part of the invention and are to be considered merely as examples for understanding the invention. A configuration example for providing such specific information will be described with reference to Fig. 19.

Fig. 19 is a functional block diagram showing components according to a third modification example of the controller included in the injection molding machine according to the embodiment. A controller 700C shown in Fig. 19 includes a specific information providing section 710C instead of the specific information providing section 710 of Fig. 6. A sensor data input section 730C and the specific information providing section 710C included in the controller 700C are functions realized by the CPU 701 executing a program stored in the storage medium 702 shown in Fig. 1. In addition, all or some of these functions may be executed on hardware by wired logic.

The sensor 32 and a sound output section (for example, a speaker) 13 are connected to the controller 700C.

The sensor 32 is, forexample, a pressure sensor. The sensor 32 is provided for each of the four operation buttons 1-1 to 1-4. The sensor 32 converts a pressure applied to the operation button 1 into a voltage having a different value depending on the magnitude of pressure and inputs voltage data indicating the converted voltage value to the sensor data input section 730C as data 3b.

The sound output section 13 is provided near the mold unit 800 of the injection molding machine 10, near the second operation section 752, or the like. The sound output section 13 is a sound output means for providing the operator with specific information for specifying the operation button 1 (sound for specifying the operation button 1, voice guidance for specifying the operation button 1, or the like) in order for the operator to recognize a type of the button (for example, whether the button is a mold opening button or a mold closing button) when the operator touches the operation button 1.

Moreover, the sound output section 13 changes a type of sound to be output before and after being pressed down to the end in order for the operator to recognize that the operation button 1 is pressed down to the end in the case where the operation button 1 is pressed down to the end.

The controller 700C includes the sensor data input section 730C and the specific information providing section 710C.

The sensor data input section 730C receives the data 3b and transmits the input data 3b to a button specification section 717A and a press detection section 719A.

The specific information providing section 710C includes a first sound data pattern output section 20, a second sound data pattern output section 26, and a sound data pattern transmission section 724 as functions for providing the operator with the specific information (sound for specifying the operation button 1, voice guidance for specifying the operation button 1, or the like) for specifying the operation button 1 to be pressed by the operator.

The first sound data pattern output section 20 includes the button specification section 717A and a first sound data pattern generation section 722. The second sound data pattern output section 26 includes the press detection section 719A and a second sound data pattern generation section 723.

The button specification section 717A specifies the type of the operation button 1 touched by the hand of the operator based on the input data 3b (voltage having a different value depending on the magnitude of pressure), generates a button specification information 717a which is information indicating the type of the specified operation button 1, and inputs the generated button specification information 717a to the first sound data pattern generation section 722.

For example, the button specification section 717A stores button specification table information for specifying the operation button 1. In the button specification table information, an identification number of each of the plurality of operation buttons 1 is associated with an identification number of the sensor 32 provided in each of the plurality of operation buttons 1.

The button specification section 717A which receives the data 3b refers to the button specification table information to specify the type of the operation button 1 provided with the sensor 32 which is the transmission source of the data 3b.

It is possible to specify the type of the operation button 1 by specifying the identification number of the operation button 1. Therefore, the button specification section 717A inputs the button specification information 717a which is the information indicating the type of the specified operation button 1 to the first sound data pattern generation section 722.

The first sound data pattern generation section 722 generates a sound signal data pattern 722a indicating the type of each of the plurality of operation buttons as specific information of each of the plurality of operation buttons based on the specification information 717a, and inputs the generated sound signal data pattern 722a to the sound data pattern transmission section 724 in order for the operator to recognize a type of the button (for example, whether the button is a mold opening button or a mold closing button) when the operator touches the operation button 1.

For example, the first sound data pattern generation section 722 stores sound table information for generating sound signals having different frequencies. The sound signal is a signal indicating a sound which can specify the type of each of the plurality of operation buttons. For example, the sound signal may be a signal indicating a sound such as a continuous sound or an intermittent sound, or a signal indicating the voice guidance . In the sound table information, the type of each of the plurality of operation buttons 1 is associated with sound information representing a sound pattern having a different frequency. The first sound data pattern generation section 722 which receives the button specification information 717a refers to the sound table information to read the sound information corresponding to the type of the operation button 1, generates the sound signal data pattern 722a based on the read sound information, and inputs the generated sound signal data pattern 722a to the sound data pattern transmission section 724.

For example, in the case where the operation button 1-1 shown in Fig. 4 is pressed, the first sound data pattern generation section 722 generates a first intermittent sound signal as the sound signal data pattern 722a based on sound information corresponding to the operation button 1-1. The first intermittent sound is, for example, an intermittent sound in which a signal generation period and a signal pause period generated by a 100 Hz signal are alternately continued. In addition, instead of such a first intermittent sound, voice guidance indicating that the operation button 1-1 is pressed (for example, "the operation button 1-1 is pressed") may be played or a continuous sound may be continuously generated by the 100 Hz signal.

Moreover, in the case where the operation button 1-2 shown in Fig. 4 is pressed, the first sound data pattern generation section 722 generates a second intermittent sound signal as the sound signal data pattern 722a based on sound information corresponding to the operation button 1-2. The second intermittent sound is, for example, an intermittent sound in which a signal generation period and a signal pause period generated by a 200 Hz signal are alternately continued. In addition, instead of such a second intermittent sound, voice guidance indicating that the operation button 1-2 is pressed (for example, "the operation button 1-2 is pressed") may be played or a continuous sound may be continuously generated by the 200 Hz signal.

In addition, the first intermittent sound signal and the second intermittent sound signal are not limited to the above as long as the operator can recognize the type of button. For example, a continuous sound signal of 100 Hz may be employed instead of the first intermittent sound signal, or a continuous sound signal of 200 Hz may be employed instead of the second intermittent sound signal.

The press detection section 719A determines whether or not a voltage value detected by the sensor 32 is equal to or larger than a predetermined set value to determine whether the operation button 1 is in a state before being pressed down to the end or pressed down to the end.

When the press detection section 719A determines that the operation button 1 is pressed down to the end, the press detection section 719A generates a press detection signal 719a and inputs the generated press detection signal 719a to the second sound data pattern generation section 723.

The press detection signal 719a is, for example, a signal which generates a continuous sound having a frequency of 1 kHz in order for the operator to recognize that the operation button 1 is pressed down to the end.

The second sound data pattern generation section 723 which receives the press detection signal 719a generates, for example, a second sound data pattern 723a for generating the continuous sound and inputs the generated second sound data pattern 723a to the sound data pattern transmission section 724.

The sound data pattern transmission section 724 transmits the input sound signal data pattern 722a and the second sound data pattern 723a to the sound output section 13.

For example, in the case where the operation button 1-1 shown in Fig. 4 is pressed, the first intermittent sound signal (sound signal data pattern 722a) generated by the first sound data pattern generation section 722 is transmitted to the sound output section 13. Accordingly, the sound output section 13 emits the first intermittent sound. The first intermittent sound is, for example, an intermittent sound in which the signal generation period and the signal pause period generated by a 100 Hz signal are alternately continued.

Moreover, in the case where the operation button 1-2 shown in Fig. 4 is pressed, the second intermittent sound signal (sound signal data pattern 722a) generated by the first sound data pattern generation section 722 is transmitted to the sound output section 13. Accordingly, the sound output section 13 emits the second intermittent sound. The second intermittent sound is, for example, an intermittent sound in which the signal generation period and the signal pause period generated by a 200 Hz signal are alternately continued.

Moreover, in the case where the operation button 1-1 is pressed down to the end shown in Fig. 4, the sound output section 13 emits a continuous sound having a frequency of 1 kHz.

Next, an operation by the controller 700C will be described.

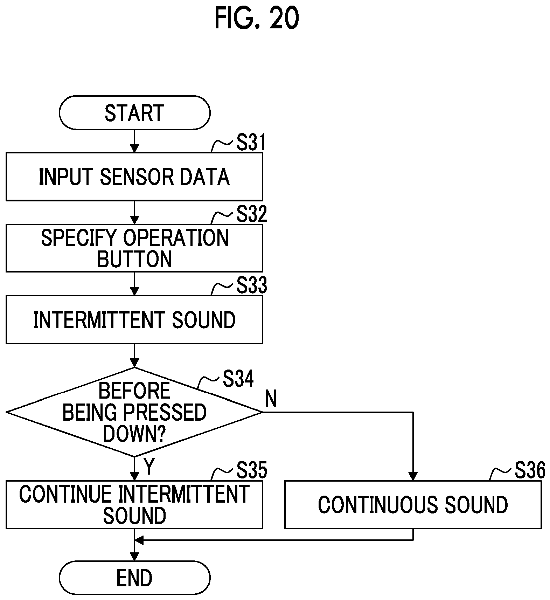

Fig. 20 is a flowchart of sound processing by the controller shown in Fig. 19.

In step S31, the data 3b from the sensor 3 is input.

In step S32, the type of the operation button 1 touched by the hand of the operator is specified based on the input data 3b (voltage having a different value depending on the magnitude of pressure).

In step S33, the sound signal data pattern 722a for generating the intermittent sound corresponding to the type of the pressed operation button 1 is generated based on the button specification information 717a in order for the operator to recognize the type of the operation button 1 touched by the operator (for example, whether the button is a mold opening button or a mold closing button) . Then, the sound signal data pattern 722a is transmitted to the sound output section 13 through the sound data pattern transmission section 724 to generate the intermittent sound corresponding to the type of the pressed operation button 1.

In step S34, it is determined whether or not a voltage value is equal to or larger than a predetermined set value based on the input data 3b (voltage having a different value depending on the magnitude of pressure) to determine whether or not the operation button 1 is in the state before being pressed down to the end.

In the case where the operation button 1 is in the state before being pressed down to the end (Yes in step S34), the second sound data pattern 723a is not generated. Therefore, the intermittent sound is continuously generated by the sound signal data pattern 722a (step S35).

In the case where the operation button 1 is not in the state before being pressed down to the end, that is, in the case where the operation button 1 is pressed down to the end (No in step S34), the second sound data pattern 723a is transmitted to the sound output section 13 through the sound data pattern transmission section 724 to generate a continuous sound representing that the operation button 1 is pressed down (step S36) .

As described above, the operation unit 750 of the injection molding machine 10 has the plurality of operation buttons 1, and the controller 700 of the injection molding machine 10 has the specific information providing section 710C which provides an operator with specific information (sound for specifying the operation button 1, voice guidance for specifying the operation button 1, or the like) for specifying the operation button 1 to be pressed by the operator. Then, the specific information providing section 710C is configured to generate a sound signal data pattern 722a for generating a sound specifying the type of each of the plurality of operation buttons and input the generated sound signal data pattern 722a to the sound output section 13.

With this configuration, it is possible for the operator to recognize whether the pressed button is the desired operation button 1 or a button other than the desired operation button 1 based on the difference in the sound of the pressed operation button 1.

Moreover, even in a case where a button other than the desired operation button 1 is touched, it is possible for the operator to immediately notice a mistake in pressing and press the desired operation button 1 again. As a result, the mold unit 800 can be prevented from performing an operation different from the operation intended by the operator, and thus the mold unit 800 can be prevented from being damaged.

Moreover, with the controller 700C, it is possible to inform the operator that the operation button 1 is pressed down by generating a sound different from the sound before being pressed when the operation button 1-1 is pressed down. Therefore, it is possible for the operator to recognize the operation button 1 corresponding to the operation of the injection molding machine 10 even without visually checking the pressed operation button 1. As a result, it is possible to save time and effort to alternately check the operation button 1 and the operation of the mold unit 800 and thus to significantly shorten the work time such as molding condition setting.

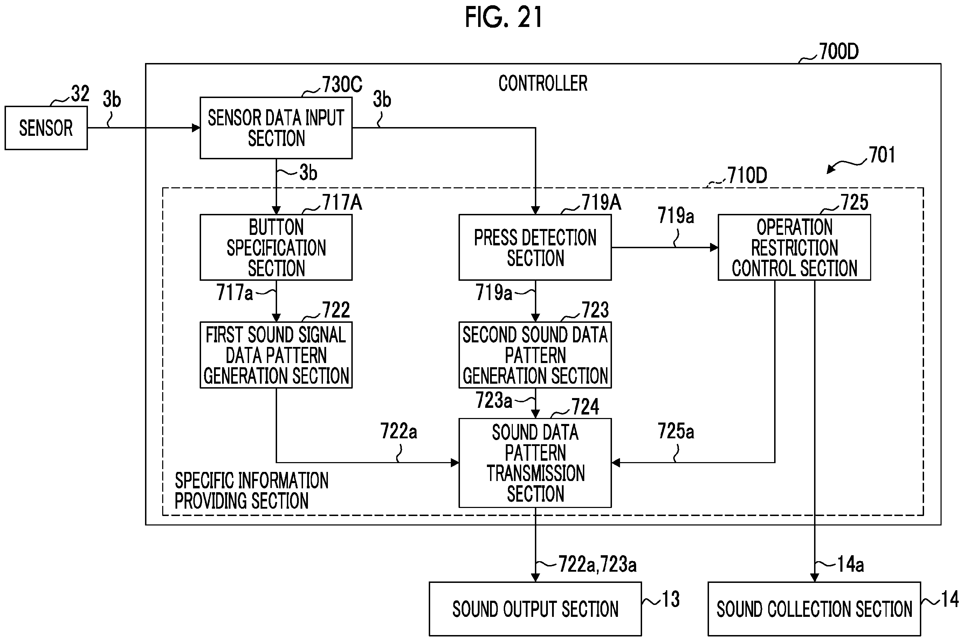

So far, specific information for specifying the operation button 1 to be pressed by the operator has been described. However, in the following, an interlock function which restricts the operation of the injection molding machine 10 even in a case where the operation button 1 is pressed mistakenly will be described with reference to Fig. 21.

Fig. 21 is a functional block diagram showing components according to a fourth modification example of the controller included in the injection molding machine according to the embodiment. A controller 700D shown in Fig. 21 includes a specific information providing section 710D instead of the specific information providing section 710C of Fig. 19. The sensor data input section 730C and the specific information providing section 710D included in the controller 700D are functions realized by the CPU 701 executing a program stored in the storage medium 702 shown in Fig. 1. In addition, all or some of these functions may be executed on hardware by wired logic.

The controller 700D includes an operation restriction control section 725 which does not cause the injection molding machine to execute an operation corresponding to the pressed operation button until a predetermined instruction is confirmed by the operator, in addition to the button specification section 717A, the first sound data pattern generation section 722, the press detection section 719A, the second sound data pattern generation section 723, and the sound data pattern transmission section 724 shown in Fig. 19. The sound collection section 14 is connected to the operation restriction control section 725.

The sound collection section 14 is provided, for example, near the mold unit 800 of the injection molding machine 10 or near the second operation section 752. The sound collection section 14 is a microphone for voice detection which detects a voice emitted by the operator as a vibration waveform and inputs a signal indicating the detected vibration waveform as voice information to the operation restriction control section 725 of the specific information providing section 710D through the sensor data input section 730.

When it is determined that the operation button 1 is pressed down to the end based on the press detection signal 719a from the press detection section 719A, the operation restriction control section 725 generates voice guidance information 725a for guiding that the operation button 1 is pressed down to the end and inputs the generated voice guidance information 725a to the sound data pattern transmission section 724.

In this case, the voice guidance is, for example, "The operation button 1-1 is pressed. Execute the operation by the operation button 1-1?" in the case where the operation button 1-1 shown in Fig. 4 is pressed.

Moreover, the voice guidance is, for example, "The operation button 1-2 is pressed. Execute the operation by the operation button 1-2?" in the case where the operation button 1-2 shown in Fig. 4 is pressed.

When there is a response from the operator with respect to such voice guidance, speech contents are detected by the sound collection section 14. The sound collection section 14 converts the detected speech contents into voice information 14a and inputs the converted voice information 14a to the operation restriction control section 725. Examples of the speech contents in this case are "Yes" (an affirmative answer) and "No" (a non-affirmative answer) . In addition, the speech contents are not limited thereto and may be, for example, "Execute" (an affirmative answer), "Do not execute" (a non-affirmative answer), or the like.

The operation restriction control section 725 analyzes a frequency component included in the voice information 14a to determine whether or not the answer is affirmative with respect to a question by the voice guidance. In addition, since a method of analyzing the speech contents from the voice information 14a is known as disclosed in Japanese Unexamined Patent Publication No. 2015-211403, Japanese Unexamined Patent Publication No. 2018-156523, and the like, the description thereof is omitted.

As a result of the determination, in a case where the answer is affirmative, the operation restriction control section 725 determines that the pressed button is the operation button 1 desired by the operator and enables the function of the operation button 1 such that the operation corresponding to the function of the operation button 1 is executed by the injection molding machine 10.

As a result of the determination, in a case where the answer is not affirmative (non-affirmative), the operation restriction control section 725 determines that the pressed button is a button other than the operation button 1 desired by the operator and disables the function of the operation button 1 such that the operation corresponding to the function of the operation button 1 is not executed by the injection molding machine 10.

As described above, with the controller 700D, the operation restriction control section 725 serves as the interlock function which restricts the operation of the injection molding machine 10 even when a button other than the desired operation button 1 is pressed. Therefore, it is possible to reliably prevent the mold unit 800 from being damaged due to a mistake in pressing the operation button 1.

In addition, the operation restriction control section 725 can also be adapted to the specific information providing section 710 shown in Fig. 6, the specific information providing section 710A shown in Fig. 11, and the like.

In addition, the projected portion 11 and the projection unit 8 shown in Fig. 5 may be provided in a wearable device, such as sunglasses or glasses, worn by the operator. In this case, a lens portion of the sunglasses, the glasses, or the like functions as the projected portion 11, and the projection unit 8 projects image light toward the lens portion. The wearable device is connected to the controller 700 shown in Fig. 6 and the like so as to be communicable by wire or wirelessly and can display the image of the operation button, the image of the hand of the operator, and the like.

In this manner, the wearable device is provided with the projected portion 11 and the projection unit 8. Therefore, it is possible for the operator to confirm the operation button and the like displayed on the wearable device without improving the injection molding machine 10. Therefore, it is possible to prevent the operation button from being pressed mistakenly while keeping a structure of the injection molding machine 10 from being complicated.

Moreover, the projected portion 11 and the projection unit 8 shown in Fig. 5 may be adapted to a holographic display device which displays the operation button or the like as a holographic image. In this case, the projected portion 11 is installed as a holographic display portion, for example, on the front surface of the slide-type safety cover 9, in front of the mold unit 800, or the like shown in Fig. 5. Moreover, the projection unit 8 functions as a projection system optical unit which projects the holographic image such as the operation button and is installed, for example, near the holographic display portion.

With such a holographic display, it is possible to three-dimensionally display the image of the operation button to be pressed by the operator and the image of the hand of the operator who is about to press the operation button. Therefore, it becomes easy to intuitively grasp the distance from the front surface of the operation button to the hand of the operator and thus to specify the operation button. Accordingly, itispossible to further prevent the operation button from being pressed mistakenly.

In addition, the specific information providing section of the injection molding machine 10 according to the present embodiment is not limited to the configuration examples shown in Figs. 11, 16, and the like as long as the specific information providing section thereof detects the operation button to be pressed by the operator, and generates and outputs the specific information corresponding to the detected operation button. That is, the specific information providing section of the injection molding machine 10 according to the present embodiment includes a button detection section which detects the operation button to be pressed by the operator and a specific information generation section which generates and outputs the specific information corresponding to the operation button detected by the button detection section. Therefore, the button detection section detects, for example, the operation button to be pressed by the operator based on the data 3a (distance data) from the sensor 31 or the data 3b (voltage having a different value depending on the magnitude of pressure) from the sensor 32, and the specific information generation section reads the specific information corresponding to the operation button detected by the button detection section from, for example, a predetermined storage unit.

In addition, the specific information providing section 710 shown in Fig. 6 may include the projection unit 8. Moreover, the specific information providing section 710A shown in Fig. 11 may include the projection unit 8.

The controller of the injection molding machine and the embodiment of the injection molding machine has been described above. However, the present invention is not limited to the above embodiment and the like, and various modifications and improvements are possible within the scope of the present invention described in the claims.

### Brief Description of the Reference Symbols

10: injection molding machine
20: condition input screen
21: first region
21a: first screen
21b: second screen
21c: third screen
21d: fourth screen
22: second region
51: input field
52a: position switching button
52b: pressure switching button
52c: external input button
60: waveform selection field
100: mold clamping unit
220: drive mechanism
300: injection unit
400: movement unit
700: controller
750: operation unit
760: display unit
800: mold unit

## Claims

1. An injection molding machine (10) comprising:
an operation unit (750); and
a controller (700),
**characterized in that**
the operation unit (750) has a plurality of operation buttons (1), and
the controller (700) has a specific information providing section (710) which provides an operator with specific information that is displayed onto a projected portion (11) for specifying the operation button (1) to be pressed by the operator so that the operator recognizes whether the operation button (1) to be pressed is a desired operation button or a button other than the desired operation button even without visually checking the operation button (1) on the operation unit (750).

2. The injection molding machine (10) according to claim 1,
wherein the controller (700) has a button detection section which detects the operation button (1) to be pressed by the operator, and
wherein the specific information providing section (710) provides the operator with the specific information of the operation button (1) detected by the button detection section.

3. The injection molding machine (10) according to claim 2, wherein the button detection section specifies a relative position of a hand of the operator with respect to a position of the operation button (1) to detect the operation button (1) to be pressed by the operator.

4. The injection molding machine (10) according to any one of claims 1 to 3, wherein the specific information providing section (710) has an image data pattern output section (22, 23, 24, 25) which outputs an image data pattern indicating the operation button (1) as the specific information of the operation button (1).

5. An operation support method for an operator operating an operation button (1) of an injection molding machine (10), the method comprising:
generating, by a controller (700) of the injection molding machine (10), specific information that is displayed onto a projected portion (11) for specifying the operation button (1) to be pressed by the operator; and
providing the specific information to the operator so that the operator recognizes whether the operation button (1) to be pressed is a desired operation button or a button other than the desired operation button even without visually checking the operation button (1) on an operation unit (750).

## Patentansprüche

1. Spritzgießmaschine (10), umfassend:
eine Bedieneinheit (750); und
eine Steuerung (700),
**dadurch gekennzeichnet, dass**
die Bedieneinheit (750) mehrere Bedientasten (1) aufweist, und
die Steuerung (700) einen Abschnitt (710) zum Bereitstellen spezifischer Informationen aufweist, der einem Bediener spezifische Informationen bereitstellt, die auf einem projizierten Abschnitt (11) angezeigt werden, um die von dem Bediener zu drückende Bedientaste (1) zu spezifizieren, so dass der Bediener erkennt, ob die zu drückende Bedientaste (1) eine gewünschte Bedientaste oder eine andere als die gewünschte Bedientaste ist, auch ohne die Bedientaste (1) auf der Bedieneinheit (750) visuell zu überprüfen.

2. Spritzgießmaschine (10) nach Anspruch 1,
bei der die Steuerung (700) einen Tastendetektionsabschnitt aufweist, der die von dem Bediener zu drückende Bedientaste (1) detektiert, und
wobei der Abschnitt (710) zur Bereitstellung spezifischer Informationen dem Bediener die spezifischen Informationen der Bedientaste (1) bereitstellt, die von dem Tastendetektionsabschnitt detektiert wurde.

3. Spritzgießmaschine (10) nach Anspruch 2,
bei der der Tastendetektionsabschnitt eine relative Position einer Hand des Bedieners in Bezug auf eine Position der Bedientaste (1) angibt, um die von dem Bediener zu drückende Bedientaste (1) zu detektieren.

4. Spritzgießmaschine (10) nach einem der Ansprüche 1 bis 3,
bei der der Abschnitt (710) zum Bereitstellen spezifischer Informationen einen Bilddatenmuster-Ausgabeabschnitt (22, 23, 24, 25) aufweist, der ein Bilddatenmuster, das die Bedientaste (1) anzeigt, als die spezifischen Informationen der Bedientaste (1) ausgibt.

5. Bedienungsunterstützungsverfahren für einen Bediener, der einen Bedienknopf (1) einer Spritzgießmaschine (10) betätigt, wobei das Verfahren umfasst:
Erzeugen, durch eine Steuerung (700) der Spritzgießmaschine (10), spezifischer Informationen, die auf einem projizierten Abschnitt (11) angezeigt werden, um die von dem Bediener zu drückende Bedientaste (1) zu spezifizieren; und
Bereitstellen der spezifischen Informationen für den Bediener, so dass der Bediener erkennt, ob die zu drückende Bedientaste (1) eine gewünschte Bedientaste oder eine andere als die gewünschte Bedientaste ist, auch ohne die Bedientaste (1) an einer Bedieneinheit (750) visuell zu überprüfen.

## Revendications

1. Une machine de moulage par injection (10) comprenant :
une unité de commande (750) ; et
un contrôleur (700),
**caractérisée en ce que**
l'unité de commande (750) possède une pluralité de touches (1), et
le contrôleur (700) possède une section de fourniture d'informations spécifiques (710) qui fournit à un opérateur des informations spécifiques qui sont affichées sur une partie projetée (11) afin d'indiquer la touche (1) à actionner par l'opérateur de sorte que l'opérateur sache si la touche (1) à actionner est une touche souhaitée ou une touche autre que la touche souhaitée même sans vérifier visuellement la touche (1) sur l'unité de commande (750).

2. La machine de moulage par injection (10) selon la revendication 1,
dans laquelle le contrôleur (700) possède une section de détection de touche qui détecte la touche (1) à actionner par l'opérateur,
et
dans laquelle la section de fourniture d'informations spécifiques (710) fournit à l'opérateur les informations spécifiques de la touche (1) détectée par la section de détection de touche.

3. La machine de moulage par injection (10) selon la revendication 2,
dans laquelle la section de détection de touche indique une position relative d'une main de l'opérateur par rapport à une position de la touche (1) afin de détecter la touche (1) à actionner par l'opérateur.

4. La machine de moulage par injection (10) selon l'une quelconque des revendications 1 à 3,
dans laquelle la section de fourniture d'informations spécifiques (710) possède une section de délivrance de modèle de données d'image (22, 23, 24, 25) qui délivre un modèle de données d'image qui indique la touche (1) en guise d'informations spécifiques de la touche (1).

5. Une méthode d'aide au fonctionnement destiné à un opérateur qui actionne une touche (1) d'une machine de moulage par injection (10), la méthode comprenant :
la génération, par un contrôleur (700) de la machine de moulage par injection (10), d'informations spécifiques qui sont affichées sur une partie projetée (11) afin d'indiquer la touche (1) à actionner par l'opérateur ; et
la fourniture des informations spécifiques à l'opérateur de sorte que l'opérateur sache si la touche (1) à actionner est une touche souhaitée ou une touche autre que la touche souhaitée même sans vérifier visuellement la touche (1) sur une unité de commande (750).
